(19) **Europäisches Patentamt**
**European Patent Office**
**Office européen des brevets**

(11) **EP 3 062 526 B1**

(12) **EUROPEAN PATENT SPECIFICATION**

(45) Date of publication and mention
of the grant of the patent:
**08.08.2018 Bulletin 2018/32**

(51) Int Cl.:
*H04Q 11/00* *(2006.01)*    *H04Q 3/66* *(2006.01)*

(21) Application number: **13897449.8**

(86) International application number:
**PCT/CN2013/087224**

(22) Date of filing: **15.11.2013**

(87) International publication number:
**WO 2015/070435 (21.05.2015 Gazette 2015/20)**

(54) **SERVICE DEPLOYMENT METHOD, APPARATUS AND NETWORK DEVICE**

DIENSTBEREITSTELLUNGSVERFAHREN UND -VORRICHTUNG SOWIE NETZWERKVORRICHTUNG

PROCÉDÉ DE DÉPLOIEMENT DE SERVICE, APPAREIL ET DISPOSITIF DE RÉSEAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**31.08.2016 Bulletin 2016/35**

(73) Proprietor: **Huawei Technologies Co., Ltd.
Longgang District
Shenzhen, Guangdong 518129 (CN)**

(72) Inventors:
• **ZHAO, Jinhua
Shenzhen
Guangdong 518129 (CN)**
• **ZENG, Feng
Shenzhen
Guangdong 518129 (CN)**

• **SHI, Lei
Shenzhen
Guangdong 518129 (CN)**
• **TAN, Lin
Shenzhen
Guangdong 518129 (CN)**

(74) Representative: **Pfenning, Meinig & Partner mbB
Patent- und Rechtsanwälte
Theresienhöhe 11a
80339 München (DE)**

(56) References cited:
**WO-A1-2011/031207    CN-A- 101 060 420
CN-A- 101 707 788    CN-A- 101 753 427
CN-A- 101 753 427    US-A1- 2013 236 169**

**Description**

**TECHNICAL FIELD**

Embodiments of the present invention relate to the field of communications technologies, and in particular, to a service deployment method and apparatus, and a network device.

**BACKGROUND**

Appearance of applications and services that occupy a large quantity of bandwidth resources promotes deployment of a wavelength division multiplexing (Wavelength Division Multiplexing, WDM for short) optical network. To resolve a problem existing in a synchronous digital hierarchy (Synchronous Digital Hierarchy, SDH for short) optical transmission system, an automatically switched optical network (Automatically Switched Optical Network, ASON for short) emerges, which has the following advantages: a control plane is added, signaling is introduced, and connection management and failure recovery capabilities of an optical network are enhanced.

As an important function of optical network management of the ASON, service deployment mainly includes service path computation and simulation service-path survivability analysis. Service path computation and simulation service-path survivability analysis of the ASON require many CPU computation resources, but a CPU in a router cannot meet the requirement. In order to separate service path computation from the router, a path computation element (Path Computation Element, PCE for short) emerges, and the PCE implements service path computation and simulation service-path survivability analysis.

A service deployment procedure of the ASON includes:

(1) The PCE receives a service path computation request sent by a requesting point, where generally the requesting point is a node in the ASON.
(2) The PCE performs service path computation according to an idle resource existing in the network, determines a service path, and then performs simulation survivability analysis on all service paths in the network that include the determined service path.
(3) If simulation succeeds, that is, all the service paths meet a survivability requirement, the PCE sends the determined service path to the requesting point, and then starts a path establishment process; if simulation fails, (2) is repeated.

In an existing service deployment procedure of an ASON, a relatively long time is required to perform simulation survivability analysis on a service path; therefore service deployment takes a long time, and efficiency of establishing a new service path is low.

US2013236169A1 provides dynamic performance monitoring systems and methods for optical networks to ascertain optical network health in a flexible and accurate manner. The present invention introduces accurate estimations for optical channel performance characteristics based either on existing channels or with a dynamic optical probe configured to measure characteristics on unequipped wavelengths. Advantageously, the dynamic performance monitoring systems and methods introduce the ability to determine physical layer viability in addition to logical layer viability.

CN101707788A discloses a differential pricing strategy based dynamic programming method of multilayer network services, comprising the following contents: control node device structures under the differential pricing strategy, differential pricing methods under different transmission technologies, realization method of flow-based fairness principles of differential pricing, transmission node device structures under the differential pricing strategy, comprehensive pricing flows in dynamic network programming and adaptive layered pricing programming flows of multilayer networks. Through cooperation of a central network management system and introduction of strategic pricing module agents, the method of the invention solves the problem that the complicated traffic engineering extension is increasingly complicated.; Assisted by central decision, the method realizes more optimized service flow adjustment and simultaneously maximizes the benefits of the network operators. Operation of the network can be macroscopically grasped through adaptive adjustment of the service flow, adaptive optimization is realized through dynamic adjustment, different charging standards for different time intervals are easily customized, management is convenient and the cost is lower. The method adopts the hypothesis-based modes to realize precomputation, realizes solving complicated problems in inverted sequence, realizes computation of the central network management system by configuring the differential pricing strategy module at the management and control coordination interface, evaluates the real-time condition of the network and adaptively modulates the flow distribution condition of the network.

**SUMMARY**

Embodiments of the present invention provide a service deployment method and apparatus, and a network device, which are used to resolve problems in the prior art that service deployment takes a long time and efficiency of establishing a new service path is low.

According to a first aspect, an embodiment of the present invention provides a service deployment method, including:

receiving a service path computation request sent by a node;
determining a first idle resource in all resources of a network except a critical resource, where the critical resource is a resource that enables an existing service path in the network to meet a survivability requirement;
performing service path computation based on the first idle resource, to obtain a first service path;
performing, based on the first idle resource, simulation survivability analysis on the first service path; and
if the first service path meets the survivability requirement, sending the first service path to the node.

In a first possible implementation manner of the first aspect, after the performing simulation survivability analysis on the first service path, the method further includes:

if the first service path does not meet the survivability requirement, determining, in the first idle resource, a second idle resource that causes the first service path not meeting the survivability requirement;
if it is determined, according to a first instruction, that service path computation needs to be continued, determining a third idle resource in all the resources of the network except the critical resource and the second idle resource;
performing service path computation based on the third idle resource, to obtain a second service path;
performing, based on the first idle resource, simulation survivability analysis on the second service path; and
if the second service path meets the survivability requirement, sending the second service path to the node.

In a second possible implementation manner of the first aspect, after the performing simulation survivability analysis on the first service path, the method further includes:

if the first service path does not meet the survivability requirement, determining a resource that is absent from the first idle resource and whose absence causes the first service path not meeting the survivability requirement; and
if it is determined, according to a second instruction, to stop service path computation, outputting information about the resource that is absent.

With reference to the first aspect or the first or the second possible implementation manner of the first aspect, in a third possible implementation manner of the first aspect, before the determining a first idle resource in all resources of a network except a critical resource, the method further includes:
based on all the resources of the network, performing simulation survivability analysis on the existing service path in the network, and determining the critical resource that enables the existing service path in the network to meet the survivability requirement.

With reference to the third possible implementation manner of the first aspect, in a fourth possible implementation manner of the first aspect, the performing simulation survivability analysis on the existing service path in the network, and determining the critical resource that enables the existing service path in the network to meet the survivability requirement includes:

receiving an offline service survivability analysis request;
based on all the resources of the network, performing the survivability analysis on the existing service path in the network, and determining a fourth idle resource that enables the existing service path in the network to meet the survivability requirement; and
selecting, from the fourth idle resource according to a preset condition, a minimum quantity of resources that enable the existing service path to meet the survivability requirement, as the critical resource.

With reference to the fourth possible implementation manner of the first aspect, in a fifth possible implementation manner of the first aspect, a quantity of resources included in the fourth idle resource is N, and the selecting, from the fourth idle resource according to a preset condition, a minimum quantity of resources that enable the existing service path to meet the survivability requirement, as the critical resource includes:

selecting, from the fourth idle resource according to a probability that each resource in the fourth idle resource is selected, $[N/2]$ resources as the critical resource;
performing, based on the critical resource, the survivability analysis on the existing service path;
if the existing service path meets the survivability requirement, selecting, from the critical resource according to the probability that each resource in the critical resource is selected,

$$\left[\left[N/2\right]/2\right]$$

resources as a first critical resource; and

based on the first critical resource, repeatedly performing the survivability analysis on the existing service path until the following cases are met: if a quantity of first critical resources is M, the existing service path meets the survivability requirement, and if a quantity of first critical resources is M-1, the existing service path does not meet the survivability requirement, and determining that a minimum quantity of critical resources that enable the existing service path to meet the survivability requirement is M;

where the probability that each resource is selected is determined by a quantity of times that each resource is used when the survivability analysis is performed on the existing service path, N and M are positive integers, and a symbol [ ] denotes that a value within the symbol is rounded up or rounded down.

With reference to the fifth possible implementation manner of the first aspect, in a sixth possible implementation manner of the first aspect, after the performing, based on the critical resource, the survivability analysis on the existing service path, the method further includes:

if the existing service path does not meet the survivability requirement, selecting, from resources in the fourth idle resource except the critical resource according to the probability that each resource in the fourth idle resource is selected, [(*N*-[*N*/2])/2] resources, adding the selected resources to the critical resource, and using the critical resource to which the selected resources are added as a second critical resource; and

based on the second critical resource, repeatedly performing the survivability analysis on the existing service path until the following cases are met: if a quantity of second critical resources is L, the existing service path does not meet the survivability requirement, and if a quantity of second critical resources is L+1, the existing service path meets the survivability requirement, and determining that a minimum quantity of critical resources that enable the existing service path to meet the survivability requirement is L+1, where L is a positive integer.

With reference to the first aspect or the first, the second, the third, the fourth, the fifth, or the sixth possible implementation manner of the first aspect, in a seventh possible implementation manner of the first aspect, the survivability analysis includes one-time failure survivability analysis and/or two-time failure survivability analysis.

With reference to the first aspect or the first, the second, the third, the fourth, the fifth, the sixth, or the seventh possible implementation manner of the first aspect, in an eighth possible implementation manner of the first aspect, all the resources include a link resource and a regenerator resource.

According to a second aspect, an embodiment of the present invention provides a service deployment apparatus, including:

a receiving module, configured to receive a service path computation request sent by a node;

a first determining module, configured to determine a first idle resource in all resources of a network except a critical resource, where the critical resource is a resource that enables an existing service path in the network to meet a survivability requirement;

a first computation module, configured to perform service path computation based on the first idle resource, to obtain a first service path;

a processing module, configured to perform, based on the first idle resource, simulation survivability analysis on the first service path; and

a sending module, configured to: if the first service path meets the survivability requirement, send the first service path to the node.

In a first possible implementation manner of the second aspect, the apparatus further includes:

a second determining module, configured to: if the first service path does not meet the survivability requirement, determine, in the first idle resource, a second idle resource that causes the first service path not meeting the survivability requirement;

a third determining module, configured to: if it is determined, according to a first instruction, that service path computation needs to be continued, determine a third idle resource in all the resources of the network except the critical resource and the second idle resource; and

a second computation module, configured to perform service path computation based on the third idle resource, to obtain a second service path, where

the processing module is further configured to perform, based on the first idle resource, simulation survivability analysis on the second service path; and

the sending module is further configured to: if the second service path meets the survivability requirement, send the second service path to the node.

In a second possible implementation manner of the second aspect, the apparatus further includes:

a fourth determining module, configured to: if the first service path does not meet the survivability requirement, determine a resource that is absent from the first idle resource and whose absence causes the first service path not meeting the survivability requirement; and

an output module, configured to: if it is determined, according to a second instruction, to stop service path computation, output information about the resource that is absent.

With reference to the second aspect or the first or the second possible implementation manner of the second aspect, in a third possible implementation manner of the second aspect, before determining the first idle resource in all the resources of the network except the critical resource, the first determining module is further configured to: based on all the resources of the network, perform simulation survivability analysis on the existing service path in the network, and determine the critical resource that enables the existing service path in the network to meet the survivability requirement.

With reference to the third possible implementation manner of the second aspect, in a fourth possible implementation manner of the second aspect, the first determining module includes:

a receiving unit, configured to receive an offline service survivability analysis request;

an analysis unit, configured to: based on all the resources of the network, perform the survivability analysis on the existing service path in the network, and determine a fourth idle resource that enables the existing service path in the network to meet the survivability requirement; and

a processing unit, configured to select, from the fourth idle resource according to a preset condition, a minimum quantity of resources that enable the existing service path to meet the survivability requirement, as the critical resource.

With reference to the fourth possible implementation manner of the second aspect, in a fifth possible implementation manner of the second aspect, a quantity of resources included in the fourth idle resource is N, and the processing unit is specifically configured to:

select, from the fourth idle resource according to a probability that each resource in the fourth idle resource is selected, $[N/2]$ resources as the critical resource;

perform, based on the critical resource, the survivability analysis on the existing service path;

if the existing service path meets the survivability requirement, select, from the critical resource according to the probability that each resource in the critical resource is selected, $[[N/2]/2]$ resources as a first critical resource; and based on the first critical resource, repeatedly perform the survivability analysis on the existing service path until the following cases are met: if a quantity of first critical resources is M, the existing service path meets the survivability requirement, and if a quantity of first critical resources is M-1, the existing service path does not meet the survivability requirement, and determine that a minimum quantity of critical resources that enable the existing service path to meet the survivability requirement is M;

where the probability that each resource is selected is determined by a quantity of times that each resource is used when the survivability analysis is performed on the existing service path, N and M are positive integers, and a symbol [ ] denotes that a value within the symbol is rounded up or rounded down.

With reference to the fifth possible implementation manner of the second aspect, in a sixth possible implementation manner of the second aspect, after performing, based on the critical resource, the survivability analysis on the existing service path, the processing unit is further configured to:

if the existing service path does not meet the survivability requirement, select, from resources in the fourth idle resource except the critical resource according to the probability that each resource in the fourth idle resource is selected, $\lceil(N-\lceil N/2\rceil)/2\rceil$ resources, and add the selected resources to the critical resource; and based on the second critical resource, repeatedly perform the survivability analysis on the existing service path until the following cases are met: if a quantity of second critical resources is L, the existing service path does not meet the survivability requirement, and if a quantity of second critical resources is L+1, the existing service path meets the survivability requirement, and determine that a minimum quantity of critical resources that enable the existing service path to meet the survivability requirement is L+1, where L is a positive integer.

With reference to the second aspect or the first, the second, the third, the fourth, the fifth, or the sixth possible implementation manner of the second aspect, in a seventh possible implementation manner of the second aspect, the survivability analysis includes one-time failure survivability analysis and/or two-time failure survivability analysis.

With reference to the second aspect or the first, the second, the third, the fourth, the fifth, the sixth, or the seventh possible implementation manner of the second aspect, in an eighth possible implementation manner of the second aspect, all the resources include a link resource and a regenerator resource.

According to a third aspect, an embodiment of the present invention provides a network device, including: a processor, a memory, and at least one communications port, where the communications port is configured to communicate with a peripheral device, the memory is configured to store a computer program instruction, and the processor is coupled with the memory, and configured to invoke the computer program instruction stored in the memory, to perform the service deployment method according to any one of the foregoing descriptions.

One technical solution of the foregoing technical solutions has the following advantages or beneficial effects: According to the service deployment method and apparatus and the network device provided in the embodiments of the present invention, path computation is performed on a new service only by using an idle resource in a network except a critical resource that enables an existing service path to meet a survivability requirement, and simulation survivability analysis is performed only on a path of the new service, so that the path of the new service is determined, and a time for performing service survivability analysis is reduced. Therefore, a time for service deployment is reduced, and efficiency of establishing a new service path is improved.

**BRIEF DESCRIPTION OF DRAWINGS**

To describe the technical solutions in the embodiments of the present invention or in the prior art more clearly, the following briefly introduces the accompanying drawings required for describing the embodiments. Apparently, the accompanying drawings in the following description show some embodiments of the present invention, and persons of ordinary skill in the art may still derive other drawings from these accompanying drawings without creative efforts.

FIG. 1 is a schematic flowchart of Embodiment 1 of a service deployment method according to the present invention;
FIG. 2 is a schematic flowchart of Embodiment 2 of a service deployment method according to the present invention;
FIG. 3 is a schematic flowchart of Embodiment 3 of a service deployment method according to the present invention;
FIG. 4 is a schematic flowchart of Embodiment 4 of a service deployment method according to the present invention;
FIG. 5 is a schematic flowchart of Embodiment 5 of a service deployment method according to the present invention;
FIG. 6 is a network topology diagram of Embodiment 6 of a service deployment method according to the present invention;
FIG. 7 is a schematic flowchart of Embodiment 6 of the service deployment method in a network shown in FIG. 6 according to the present invention;
FIG. 8 is a schematic structural diagram of Embodiment 1 of a service deployment apparatus according to the present invention;
FIG. 9 is a schematic structural diagram of Embodiment 2 of a service deployment apparatus according to the present invention;
FIG. 10 is a schematic structural diagram of Embodiment 3 of a service deployment apparatus according to the present invention;
FIG. 11 is a schematic structural diagram of Embodiment 4 of a service deployment apparatus according to the present invention; and
FIG. 12 is a schematic structural diagram of an embodiment of a network device according to the present invention.

**DESCRIPTION OF EMBODIMENTS**

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

A service deployment method described in the embodiments of the present invention is applicable to various optical network systems, for example, an automatically switched optical network ASON system, a wavelength division multiplexing WDM optical network system, an intelligent optical network (intelligent optical network, ION for short) system, and other optical network systems. The embodiments of the present invention are described by using an ASON as an example.

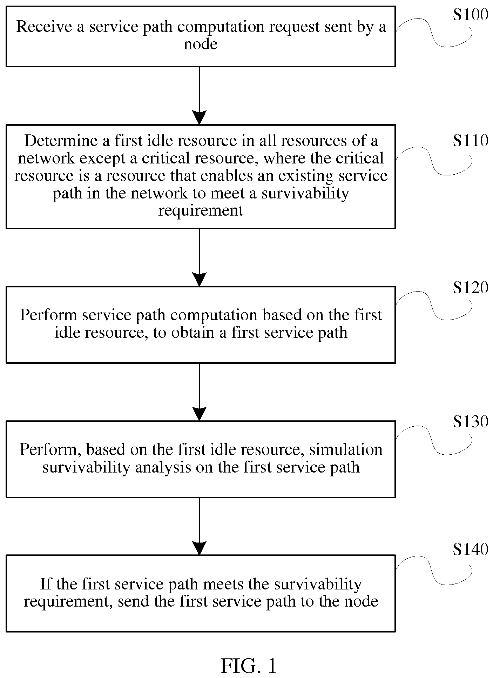

FIG. 1 is a schematic flowchart of Embodiment 1 of a service deployment method according to the present invention. As shown in FIG. 1, the method includes:

S100. Receive a service path computation request sent by a node.

This embodiment may be performed by a service path computation apparatus, for example, a path computation element PCE may be used, or a service path computation apparatus that is newly added and set may be used, which is not limited in this embodiment. This embodiment is described by using a PCE as an example.

A service path computation request is generally sent by each node in an ASON. For example, when a node B in the ASON receives a new service, the node B may initiate a service path computation request to the PCE.

S110. Determine a first idle resource in all resources of a network except a critical resource, where the critical resource is a resource that enables an existing service path in the network to meet a survivability requirement.

A service path refers to a service route of a service from a source node to a sink node in a network. For example, if for a service with a service identifier of LSP0, a source node is B, a sink node is F, and the service passes through a node E, a service path of the service LSP0 is B-E-F.

That a service path meets a survivability requirement means: When a network failure occurs, a service path meets a requirement of being recoverable. A critical resource refers to a resource ensuring that any existing service path in a network can be successfully recovered when a network failure occurs.

Specifically, all the resources include a link resource and a regenerator resource.

The ASON includes a node and a link between nodes. One or more regenerator resources are configured on a node, providing a regenerator for a service that passes through the node and for which noise needs to be filtered out and an optical signal needs to be strengthened. For example, for a service LSP1, a source node is s, a sink node is t, and nodes A, B, and C need to be passed through from the source node s to the sink node t. However, due to a cause such as interference in the optical network, an optical signal that reaches the node C is lower than a receive threshold of a device of the node C, and consequently the device of the node C cannot receive the optical signal accurately or cannot receive the optical signal. Therefore, a regenerator resource needs to be used when the optical signal reaches the node B. After noise is filtered out from the optical signal and the optical signal is strengthened, the optical signal is then sent to the node C, so that the optical signal can be accurately transmitted to the sink node t.

A link resource refers to a quantity of wavelengths included by a link between two reachable nodes in the ASON, and each service occupies one wavelength resource of a link when passing through the link, that is, each link can allow, in total, services of which a quantity is equal to a quantity of wavelengths included by the link. For example, if a quantity of wavelengths included by each link between nodes in the ASON is 80, that is, each link in the network can separately allow 80 services in total to pass through the link, then the service LSP1 described above passes through four links: s-A, A-B, B-C, and C-t in a transmission process from the node s to the node t, and occupies one wavelength resource of the links s-A, A-B, B-C, and C-t separately.

S120. Perform service path computation based on the first idle resource, to obtain a first service path.

An objective of service path computation is to obtain, by means of computation, a path on which an optical signal can reach a sink node from a source node and as few resources as possible are used, where whether the optical signal can reach the sink node is determined by a distance between nodes in the network, a device, and other related information.

For example, for a service LSP1 in a service path computation request, a source node is C, and a sink node is H. If a regenerator resource included in a first idle resource includes a regenerator resource 1 of a node E, a regenerator resource 2 and a regenerator resource 3 of a node F, a regenerator resource 3 of a node G, a regenerator resource 1 and a regenerator resource 4 of a node I, and the like, and a link resource includes B-C, B-E, C-D, D-E, E-F, D-F, D-G, F-G, G-H, and the like, after a PCE performs, based on the first idle resource, service path computation for the service LSP1, a determined service path is C-D-G-H, where the regenerator resource 3 of the node G is used on the node G.

S130. Perform, based on the first idle resource, simulation survivability analysis on the first service path.

The ASON requires a service path in the network to have a certain anti-failure capability, that is, when a failure occurs, the service path can be successfully recovered. If the service path can be successfully recovered, it indicates that the service path has survivability in the network; otherwise, if the service path cannot be successfully recovered, the service path does not have survivability in the network. Generally, a failure simulation method is used to analyze a survivability feature of a service path in the network, which is referred to as simulation survivability analysis.

Specifically, the survivability analysis includes one-time failure survivability analysis and/or two-time failure survivability analysis.

Services in the ASON are classified into services that have different service level agreements (Service Level Agreement, SLA for short), and service paths of the services that have different SLAs need to have different anti-failure capabilities. Generally, services in the ASON may be classified, according to an SLA, into a diamond-level service, a silver-level service, and a copper-level service. For a diamond-level service, it is required that a service path can be successfully recovered when either a one-time failure or a two-time failure occurs; for a silver-level service, it is required that a service path can be successfully recovered when a one-time failure occurs; for a copper-level service, there is no requirement on whether a service path can be successfully recovered when a one-time failure or a two-time failure occurs. Correspondingly, during simulation survivability analysis, for a path of a diamond-level service, not only a one-time failure needs to be simulated, but also a two-time failure needs to be simulated; for a path of a silver-level service, only a one-time failure needs to be simulated; for a path of a copper-level service, there is no need to perform simulation survivability analysis.

Assuming that there are n links in the network, and there are m services on the n links, a process of performing one-time failure simulation survivability analysis is as follows:

1. Set i=1, determine whether i is not greater than n, and if is not greater than n, assume that an $i^{th}$ link has a fiber cut.
2. Reroute all services that pass through the $i^{th}$ link.
3. Determine whether all the services that pass through the $i^{th}$ link can be successfully recovered. If all the services that pass through the $i^{th}$ link can be successfully recovered, i=i+1, and perform step 1 again, until i=n, and all services in the network meet one-time failure survivability; otherwise, if all the services that pass through the $i^{th}$ link cannot be successfully recovered, end one-time failure simulation survivability analysis, and determine that the services in the network do not meet one-time failure survivability.

Correspondingly, a process of performing two-time failure simulation survivability analysis is as follows:

1. Set i=1, determine whether i is not greater than n, and if i is not greater than n, assume that an $i^{th}$ link has a fiber cut.
2. Reroute all services that pass through the $i^{th}$ link.
3. Determine whether all the services that pass through the $i^{th}$ link can be successfully recovered. If yes, in a case in which the $i^{th}$ link has a fiber cut, determine whether all the other links can be successfully recovered in one-time failure simulation survivability analysis, and if yes, set i=i+1, perform step 1 again, until i=n, and determine that all the services in the network meet two-time failure survivability; otherwise, end two-time failure simulation survivability, and determine that the services in the network do not meet two-time failure survivability.

S140. If the first service path meets the survivability requirement, send the first service path to the node.

In this embodiment, the PCE performs, based on a first idle resource and according to an SLA of a service, one-time failure simulation survivability analysis and/or two-time failure simulation survivability analysis on a service path, sends a service path that meets a survivability requirement to a requesting node, and starts a process of establishing the service path.

According to the service deployment method provided in this embodiment, by means of the method, path computation is performed on a service based on an idle resource in a network except a critical resource that enables an existing service path to meet a survivability requirement, simulation survivability analysis is performed, based on the idle resource except the critical resource, only on a new service path, and then a service path that meets the survivability requirement is sent to a requesting node. In a case in which an existing service path in the network meeting the survivability requirement is not affected, simulation survivability analysis is performed only on a new service path, so that a time for performing simulation survivability analysis on a service path is reduced. Therefore, a time for service deployment is reduced, and efficiency of establishing a service path is improved.

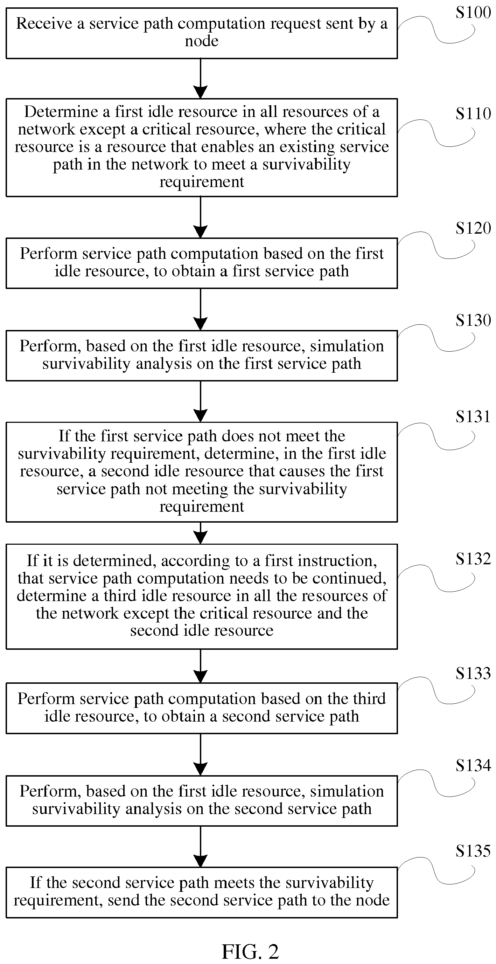

FIG. 2 is a schematic flowchart of Embodiment 2 of a service deployment method according to the present invention. As shown in FIG. 2, based on Embodiment 1, after S130 above, the following may further be included:

S131. If the first service path does not meet the survivability requirement, determine, in the first idle resource, a second idle resource that causes the first service path not meeting the survivability requirement.
S132. If it is determined, according to a first instruction, that service path computation needs to be continued, determine a third idle resource in all the resources of the network except the critical resource and the second idle resource.
S133. Perform service path computation based on the third idle resource, to obtain a second service path.
S134. Perform, based on the first idle resource, simulation survivability analysis on the second service path.
S135. If the second service path meets the survivability requirement, send the second service path to the node.

For example, if a link resource in the first idle resource in the network includes: A-B, B-C, B-E, C-D, D-E, E-F, and F-D, and a regenerator resource includes: a regenerator resource 2 and a regenerator resource 4 of a node D, and a regenerator resource 3 of a node F, when a PCE performs one-time failure simulation survivability analysis on a service path A-B-C-D of a service LSP1, the PCE finds that: after a fiber cut occurs in a link C-D, a rerouting path of the service LSP1 needs to pass through a node E, and a regenerator resource of the node E needs to be used; however, there is no available regenerator resource in the node E. It is then determined that a link resource C-D in the first idle resource causes the service LSP1 not meeting the survivability requirement. In this case, the PCE may output prompt information indicating that the first service path does not meet the survivability requirement, and inquires about whether to perform path computation again on the service. If a first instruction received at this time is to continue to perform service path computation, the PCE may perform service path computation again on the service LSP1 by using another idle resource in the first idle resource in the network except the link C-D, then performs, based on the first idle resource, simulation survivability analysis on a new service path, repeatedly performs the foregoing process, until that an obtained service path meets the survivability analysis requirement, and sends the new service path that meets the survivability analysis requirement to a requesting node.

According to the service deployment method provided in this embodiment, a PCE performs service path computation again by excluding an idle resource that causes, in a previous time, a service path not meeting a requirement in simulation survivability analysis, and service path computation of a previous time provides guidance on service path computation of a next time, so that service path computation is oriented.

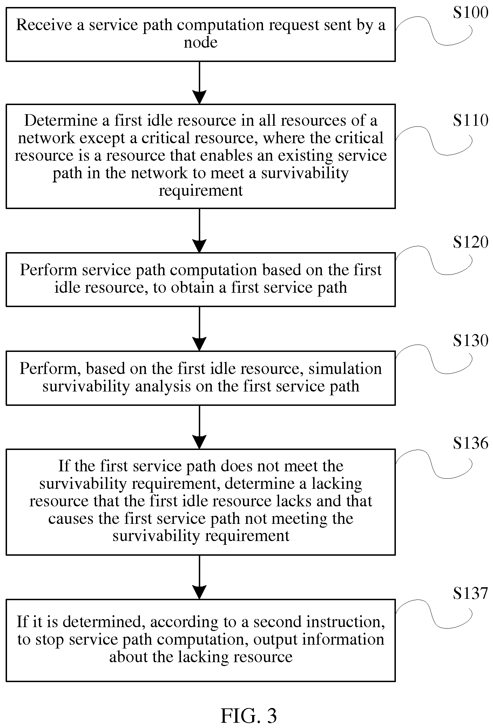

FIG. 3 is a schematic flowchart of Embodiment 3 of a service deployment method according to the present invention. As shown in FIG. 3, based on Embodiment 1, after S130 above, the following may further be included:

S136. If the first service path does not meet the survivability requirement, determine a lacking resource that the first idle resource lacks and that causes the first service path not meeting the survivability requirement.

S137. If it is determined, according to a second instruction, to stop service path computation, output information about the lacking resource.

For example, in the foregoing example, after the PCE determines that the first idle resource lacks the regenerator resource of the node E and therefore the first service path does not meet the survivability requirement, and outputs the message, if a received second instruction is to stop service path computation, the PCE outputs determined lacking resource information, for example, information indicating that the node E lacks a regenerator resource or information about a lacking link between the node A and the node C, so that a user makes, according to lacking resource information, improvements such as link capacity expansion for the network or addition of a regenerator resource, to improve survivability of the network.

According to the service deployment method provided in this embodiment, a PCE outputs lacking resource information that causes a service path in a network not meeting a survivability requirement, providing guidance on operations, maintenance, and improvement of the network.

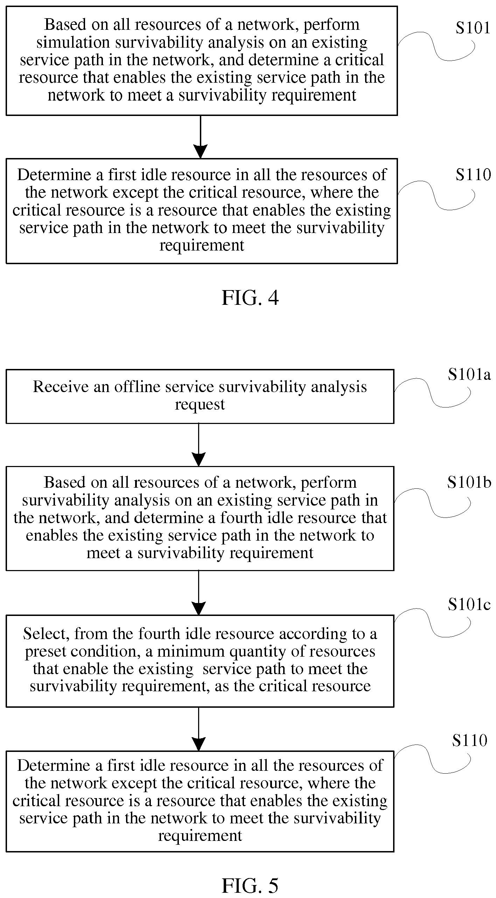

FIG. 4 is a schematic flowchart of Embodiment 4 of a service deployment method according to the present invention. As shown in FIG. 4, based on any one of Embodiment 1 to Embodiment 3, after S110 above, the following is included:

S101. Based on all the resources of the network, perform simulation survivability analysis on the existing service path in the network, and determine the critical resource that enables the existing service path in the network to meet the survivability requirement.

The existing service path in the network refers to service paths of all ongoing services that exist in the network.

According to the service deployment method provided in this embodiment, simulation survivability analysis is performed on an existing service path in a network, a critical resource that enables the existing service path in the network to meet a survivability requirement is determined, and simulation survivability analysis is performed, based on an idle resource except the critical resource, only on a new service path, thereby ensuring that processing of a new service does not affect survivability of the existing service.

Specifically, FIG. 5 is a schematic flowchart of Embodiment 5 of a service deployment method according to the present invention. As shown in FIG. 5, based on Embodiment 4, a specific implementation manner of S101 above is:

S101a. Receive an offline service survivability analysis request.

S101b. Based on all the resources of the network, perform the survivability analysis on the existing service path in the network, and determine a fourth idle resource that enables the existing service path in the network to meet the survivability requirement.

S101c. Select, from the fourth idle resource according to a preset condition, a minimum quantity of resources that enable the existing service path to meet the survivability requirement, as the critical resource.

In this embodiment, the offline service survivability analysis request may be sent by a node in the network, or a service path computation apparatus may be set to start an offline service survivability analysis request function, which is not limited in this embodiment. A PCE performs survivability analysis offline on a service, that is, the survivability analysis performed by the PCE on the service does not occupy a resource for service deployment or service processing in the network, and does not affect a time for service deployment. A user may periodically send an offline service survivability analysis request to the PCE according to a preset condition; for example, the user sends an offline service survivability analysis request to the PEC at a preset time interval or after the network receives a preset quantity of new services, which is not limited in this embodiment. Further, a quantity of resources included in the fourth idle resource is N, and the selecting, from the fourth idle resource according to a preset condition, a minimum quantity of resources that enable the existing service path to meet the survivability requirement, as the critical resource includes:

selecting, from the fourth idle resource according to a probability that each resource in the fourth idle resource is selected, [N/2] resources as the critical resource;
performing, based on the critical resource, the survivability analysis on the existing service path;
if the existing service path meets the survivability requirement, selecting, from the critical resource according to the probability that each resource in the critical resource is selected, [[N/2]/2] resources as a first critical resource; and
based on the first critical resource, repeatedly performing the survivability analysis on the existing service path until, if a quantity of first critical resources is M, the existing service path meets the survivability requirement, and if a quantity of first critical resources is M-1, the existing service path does not meet the survivability requirement, and determining that a minimum quantity of critical resources that enable the existing service path to meet the survivability requirement is M;
where the probability that each resource is selected is determined by a quantity of times that each resource is used when the survivability analysis is performed on the existing service path, N and M are positive integers, and a symbol [ ] denotes that a value within the symbol is rounded up or rounded down.

For example, if it is determined, by means of simulation survivability analysis, that a quantity of fourth idle resources that enable the existing service path in the network to meet the survivability requirement is 10, [10/2] resources are selected from the 10 fourth idle resources according to a probability that each resource is selected, as critical resources, and the survivability analysis is performed, based on only the selected five critical resources, on the existing service path. If the existing service path meets the survivability requirement, [5 / 2] resources are selected from the five critical resources, where in this embodiment, rounding up is selected, that is, three resources are used as new critical resources, and then the simulation survivability analysis is performed on the existing service path, until it is determined that a quantity of critical resources that enable the existing service path to meet the survivability requirement is minimum. The probability that each resource is selected may be determined when a fourth idle resource is being determined. If in the 10 fourth idle resources, a quantity of times that resources whose resource numbers are sequentially 0 to 9 are used in the survivability analysis of the existing service path are seven, six, four, four, three, three, two, two, two, and one, respectively, in the 10 fourth idle resources, the resource that is used seven times has the highest probability of being selected, the resource that is used six times has the second highest probability of being selected, and so on, and the resource that is used one time has the lowest probability of being selected. Correspondingly, after the performing, based on the critical resource, the survivability analysis on the existing service path, the following is further included:

if the existing service path does not meet the survivability requirement, selecting, from resources in the fourth idle resource except the critical resource according to the probability that each resource in the fourth idle resource is selected, [(N-[N/2])/2] resources, adding the selected resources to the critical resource, and using the critical resource to which the selected resources are added as a second critical resource; and
based on the second critical resource, repeatedly performing the survivability analysis on the existing service path until, if a quantity of second critical resources is L, the existing service path does not meet the survivability requirement, and if a quantity of second critical resources is L+1, the existing service path meets the survivability requirement, and determining that a minimum quantity of critical resources that enable the existing service path to meet the survivability requirement is L+1, where L is a positive integer.

For example, if after the survivability analysis is performed, based on the foregoing five critical resources that are selected from the ten fourth idle resources, on the existing service path, it is determined that all existing service paths cannot be successfully recovered, [5/2]=3 resources are selected from the other five resources in the 10 fourth idle resources and added to the previously selected five critical resources, and then the simulation survivability analysis is performed again, based on the eight second critical resources, on the existing service path.

It should be noted that, the method for determining minimum critical resources provided in the foregoing embodiment is only an exemplary implementation solution. Persons skilled in the art may understand that, a resource with the lowest probability of being selected and a resource with the second lowest probability of being selected may be sequentially removed from the fourth idle resources according to a preset step size and according to a probability that each resource is selected, and simulation survivability analysis is performed on an existing service by using a remaining resource, so that a minimum quantity of critical resources that enable the existing service path to meet the survivability requirement is determined. The preset step size may be 1, 2, 3, or the like, or the preset step size may also be a sequence of values that gradually decrease from a maximum value to a minimum value. For example, the preset step size is: (5, 4, 3, 2, 1), that is, at the first time, five resources with the lowest probabilities of being selected are removed from the fourth idle resources, and the simulation survivability analysis is performed on the existing service path by using the remaining resources; if the existing service path meets the survivability requirement, four resources are removed, three resources are removed, two resources are removed, and one resource is removed, and so on; and finally, a minimum quantity of critical resources that enable the existing service path to meet the survivability requirement is determined. A design of the step size is not limited in this embodiment.

For example, if the preset step size is 2, resources numbered 9 and 8 that have the lowest probabilities of being selected may be first removed from the foregoing 10 fourth idle resources, then the simulation survivability analysis is performed on the existing service by using remaining resources numbered 0 to 7; and if the existing service meets the survivability requirement, resources numbered 6 and 7 that have the lowest probabilities of being selected are removed from the resources numbered 0 to 7, and then the simulation survivability analysis is performed on the existing service by using remaining resources numbered 0 to 5, where assuming that at this time the existing service path does not meet the survivability analysis requirement, but after the resource numbered 6 is added to the critical resources, the existing service path meets the survivability analysis requirement, it may be determined that the minimum quantity of critical resources is 7, and numbers of the included resources are 0 to 6.

Alternatively, if the preset step size is 5, 2, 1, that is, a gradually reduced step size, the simulation survivability analysis is performed, based on resources numbered 0 to 4 that have relatively high probabilities of being selected and that are selected from the foregoing 10 fourth idle resources, on the existing service path; if it is determined that the existing service path does not meet the survivability requirement, two resources numbered 5 and 6 that have relatively high probabilities of being selected are selected from the other five resources that have relatively low probabilities of being selected, and are added to the critical resources; and after the simulation survivability analysis is performed, based on the resources numbered 0 to 6, on the existing service path, if it is determined that the existing service path does not meet the survivability requirement, but after the resource numbered 7 is added to the critical resources, the existing service path meets the survivability requirement, it may be determined that a minimum quantity of critical resources that enable the existing service path to meet the survivability requirement is 8, and numbers of the included resources are 0 to 7. According to the service deployment method provided in this embodiment, simulation survivability analysis is performed offline on an existing service path in a network according to a preset condition, a critical resource in the network is determined, and path computation and simulation survivability analysis are performed on a new service by using only an idle resource in the network except the critical resource, so that on the premise that survivability of the existing service path in the network is not affected, a time for service deployment is reduced, and efficiency of establishing a service path is improved.

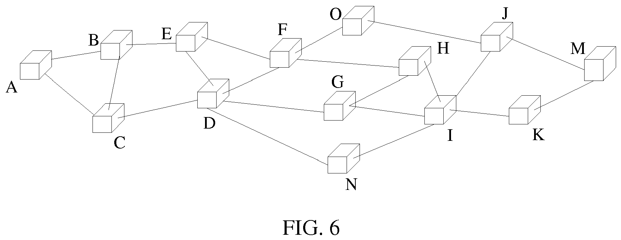

FIG. 6 is a network topology diagram of Embodiment 6 of a service deployment method according to the present invention. As shown in FIG. 6, only a regenerator resource in a network is considered. Table 1 shows information about all existing services and occupied resources in the network shown in FIG. 6.

**Table 1**

| Service number | Source node | Sink node | Service path | Regenerator usage |
|----------------|-------------|-----------|--------------|-------------------|
| LSP0 | B | F | B-E-F | None |
| LSP1 | c | I | C-D-F-H-I | F |
| LSP2 | J | E | J-O-F-E | O |
| LSP3 | M | F | M-K-I-G-D-F | I,D |

Table 2 shows information about regenerator resources in an optical network shown in FIG. 6.

**Table 2**

| Regenerator resource number | Regenerator resource | Resource status |
|-----------------------------|----------------------|-----------------|
| 0 | Regenerator resource 1 of node D | Occupied |
| 1 | Regenerator resource 2 of node D | Idle |
| 2 | Regenerator resource 3 of node D | Idle |

(continued)

| Regenerator resource number | Regenerator resource | Resource status |
|---|---|---|
| 3 | Regenerator resource 1 of node E | Idle |
| 4 | Regenerator resource 1 of node F | Occupied |
| 5 | Regenerator resource 2 of node F | Idle |
| 6 | Regenerator resource 1 of node G | Idle |
| 7 | Regenerator resource 1 of node I | Occupied |
| 8 | Regenerator resource 1 of node O | Occupied |
| 9 | Regenerator resource 1 of node N | Idle |
| 10 | Regenerator resource 1 of node C | Idle |

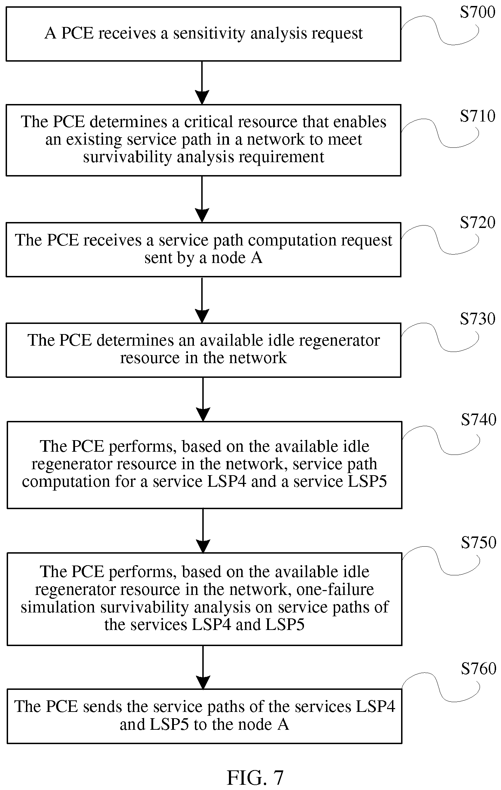

FIG. 7 is a schematic flowchart of Embodiment 6 of the service deployment method in a network shown in FIG. 6 according to the present invention. FIG. 7 shows a service deployment method, in which only a regenerator resource is considered and only one-time failure simulation survivability analysis is performed, in the network shown in FIG. 6. The method includes:

S700. A PCE receives a sensitivity analysis request.

S710. The PCE determines a critical resource that enables an existing service path in a network to meet survivability analysis requirement. The PCE performs one-time failure simulation survivability analysis on all service paths in the network by using all regenerator resources in the network, to determine the critical resource.

Table 3 shows a case in which the PCE performs one-time failure simulation survivability analysis on the existing service:

**Table 3**

| Failure scenario | Service number | Required resource | New path |
|---|---|---|---|
| (B, E) | LSP0 | Regenerator resource 2 of node D | B, C, D, F |
| (E, F) | LSP0 | Regenerator resource 2 of node D | B, E, D, F |
| (E, F) | LSP2 | Regenerator resource 2 of node F | E, D, F, O, J |
| (F, O) | LSP2 | Regenerator resource 2 of node F | E, F, H, J |
| (O, J) | LSP2 | Regenerator resource 2 of node F | E, F, H, J |
| (C, D) | LSP1 | Regenerator resource 1 of node E | C, B, E, F, H, I |
| (D, F) | LSP1 | Regenerator resource 2 of node D | C, D, G, I |
| (D, F) | LSP3 | Regenerator resource 1 of node I | M, K, I, H, F |
| (F, H) | LSP1 | Regenerator resource 2 of node D | C, D, G, I |
| (H, I) | LSP1 | Regenerator resource 2 of node D | C, D, G, I |
| (D, G) | LSP3 | Regenerator resource 1 of node I | M, K, I, H, F |
| (G, I) | LSP3 | Regenerator resource 1 of node I | M, K, I, H, F |
| (I, K) | LSP3 | Regenerator resource 1 of node I Regenerator resource 1 of node D | M, J, I, G, D, F |
| (K, M) | LSP3 | Regenerator resource 1 of node I Regenerator resource 1 of node D | M, J, I, G, D, F |

It can be seen from Table 3 that, a fourth idle resource is a regenerator resource 2 of a node D, a regenerator resource 2 of a node F, and a regenerator resource 1 of a node E, and the quantities of times that the resources are used are five, three, and one, respectively, that is, a probability that the regenerator resource 2 of the node D is selected is the highest, a probability that the regenerator resource 2 of the node F is selected is the second highest, and a probability that the regenerator resource 1 of the node E is selected is the lowest; and then [3/2]=2 resources are selected, from the three resources according to a probability that each resource is selected, as critical resources to perform one-time failure simulation survivability analysis on the existing service path. If the regenerator resource 2 of the node D and the regenerator resource 2 of the node F are selected, it is found by performing one-time failure simulation survivability that, after a link C-D on a service path of a service LSP1 has a fiber cut, rerouting of the service needs to pass through the node E, and needs to use a regenerator resource of the node E, so as to continue accurate transmission of an optical signal, that is, the service LSP1 cannot meet a survivability requirement, and therefore, the regenerator resource 1 of the node E needs to be added to the critical resources, that is, finally determined critical resources are the regenerator resource 2 of the node D, the regenerator resource 2 of the node F, and the regenerator resource 1 of the node E.

S720. The PCE receives a service path computation request sent by a node A, requesting to perform path computation for services LSP4 and LSP5, where the service LSP4 is a service from a source node I to a sink node E, and the service LSP5 is a service from a source node H to a sink node B. S730. The PCE determines an available idle regenerator resource in the network. Table 4 shows a case of a network regenerator resource updated after the PCE determines the critical resource:

**Table 4**

| Regenerator resource number | Regenerator resource | Resource status |
|---|---|---|
| 0 | Regenerator resource 1 of node D | Occupied |
| 1 | Regenerator resource 2 of node D | Sensitive |
| 2 | Regenerator resource 3 of node D | Idle |
| 3 | Regenerator resource 1 of node E | Sensitive |
| 4 | Regenerator resource 1 of node F | Occupied |
| 5 | Regenerator resource 2 of node F | Sensitive |
| 6 | Regenerator resource 1 of node G | Idle |
| 7 | Regenerator resource 1 of node I | Occupied |
| 8 | Regenerator resource 1 of node O | Occupied |
| 9 | Regenerator resource 1 of node N | Idle |
| 10 | Regenerator resource 1 of node C | Idle |

S740. The PCE performs, based on the available idle regenerator resource in the network, service path computation for the service LSP4 and the service LSP5.

Table 5 shows service paths that are obtained by means of computation by the PCE for the services LSP4 and LSP5, and regenerator usage:

**Table 5**

| Service number | Source node | Sink node | Service path | Regenerator usage |
|---|---|---|---|---|
| LSP4 | I | E | I-N-D-E | N |
| LSP5 | H | B | H-G-D-E-B | D |

S750. The PCE performs, based on the available idle regenerator resource in the network, one-time failure simulation survivability analysis on service paths of the services LSP4 and LSP5.

Table 6 shows a case in which the PCE performs the one-time failure simulation survivability analysis on the service paths of the services LSP4 and LSP5:

**Table 6**

| Failure scenario | Service number | Required regenerator resource | New path |
|---|---|---|---|
| (I, N) | LSP4 | Regenerator resource 1 of node G | I, G, D, C |

(continued)

| Failure scenario | Service number | Required regenerator resource | New path |
|---|---|---|---|
| (N, D) | LSP4 | Regenerator resource 1 of node G | I, G, D, C |
| (D, E) | LSP4 | Regenerator resource 1 of node N<br>Regenerator resource 1 of node C | I, N, D, C, B, E |
| (D, E) | LSP5 | Regenerator resource 3 of node D | H, F, D, C, B |
| (H, G) | LSP5 | Regenerator resource 3 of node D | H, F, D, E, B |
| (D, G) | LSP5 | Regenerator resource 3 of node D | H, F, D, E, B |
| (E, B) | LSP5 | Regenerator resource 3 of node D | H, F, D, C, B |

S760. The PCE sends the service paths of the services LSP4 and LSP5 to the node A.

It can be seen from Table 6 that, to perform one-time failure simulation survivability analysis on the service paths of the services LSP4 and LSP5, the regenerator resource 1 of the node G and the regenerator resource 1 of the node C are needed, and the two regenerator resources are incidentally available idle regenerator resources, that is, the service paths of the service LSP4 and the service LSP5 meet the survivability requirement, and can be deployed.

If the regenerator resource 1 of the node C in the network is a non-idle resource, when the PCE performs the one-time failure simulation survivability analysis on the services LSP4 and LSP5, the PCE finds that the service LSP5 meets the survivability requirement, but a link D-E of the service LSP4 cannot be successfully recovered after a fiber cut occurs, and then the PCE may output, after deploying the service path of the service LSP5, lacking resource information of the network, that is, lacking a regenerator resource of the node C, to provide guidance on network maintenance personnel to maintain and improve the network.

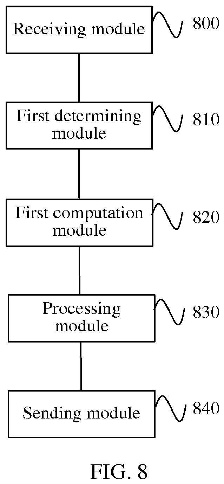

FIG. 8 is a schematic structural diagram of Embodiment 1 of a service deployment apparatus according to the present invention. As shown in FIG. 8, the apparatus includes: a receiving module 800, a first determining module 810, a first computation module 820, a processing module 830, and a sending module 840, where the receiving module 800 is configured to receive a service path computation request sent by a node; the first determining module 810 is configured to determine a first idle resource in all resources of a network except a critical resource, where the critical resource is a resource that enables an existing service path in the network to meet a survivability requirement; the first computation module 820 is configured to perform service path computation based on the first idle resource, to obtain a first service path; the processing module 830 is configured to perform, based on the first idle resource, simulation survivability analysis on the first service path; and the sending module 840 is configured to: if the first service path meets the survivability requirement, send the first service path to the node.

The service deployment apparatus provided in this embodiment may be a path computation element PCE, or may be a service path computation apparatus that is newly added and set, which is not limited in this embodiment.

The service deployment apparatus in this embodiment may perform the technical solution of the method embodiment shown in FIG. 1, implementation principles of the technical solution are similar, and details are not described herein again.

According to the service deployment apparatus provided in this embodiment, by means of a method, path computation is performed on a service based on an idle resource in a network except a critical resource that enables an existing service path to meet a survivability requirement, simulation survivability analysis is performed, based on the idle resource except the critical resource, only on a new service path, and then a service path that meets the survivability requirement is sent to a requesting node. In a case in which an existing service path in the network meeting the survivability requirement is not affected, simulation survivability analysis is performed only on a new service path, so that a time for performing simulation survivability analysis on a service path is reduced. Therefore, a time for service deployment is reduced, and efficiency of establishing a service path is improved.

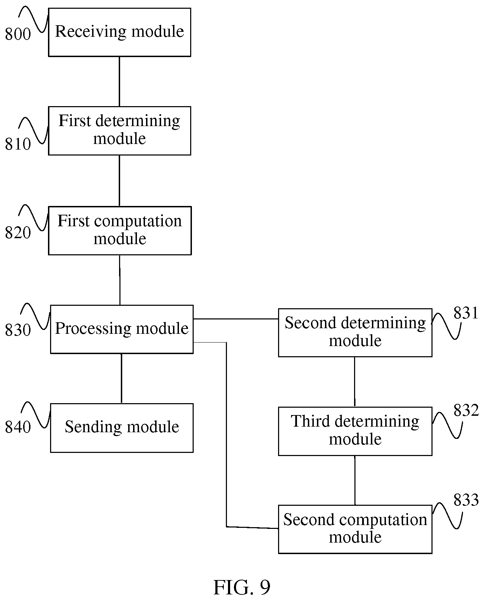

FIG. 9 is a schematic structural diagram of Embodiment 2 of a service deployment apparatus according to the present invention. As shown in FIG. 9, based on the apparatus shown in FIG. 8, the apparatus may further include:

a second determining module 831, configured to: if the first service path does not meet the survivability requirement, determine, in the first idle resource, a second idle resource that causes the first service path not meeting the survivability requirement;

a third determining module 832, configured to: if it is determined, according to a first instruction, that service path computation needs to be continued, determine a third idle resource in all the resources of the network except the critical resource and the second idle resource; and

a second computation module 833, configured to perform service path computation based on the third idle resource, to obtain a second service path, where
the processing module 830 is further configured to perform, based on the first idle resource, simulation survivability analysis on the second service path; and
the sending module 840 is further configured to: if the second service path meets the survivability requirement, send the second service path to the node.

The service deployment apparatus in this embodiment may perform the technical solution of the method embodiment shown in FIG. 2, implementation principles of the technical solution are similar, and details are not described herein again.

The service deployment apparatus provided in this embodiment performs service path computation again by excluding an idle resource that causes, in a previous time, a service path not meeting a requirement in simulation survivability analysis, and service path computation of a previous time provides guidance on service path computation of a next time, so that service path computation is oriented.

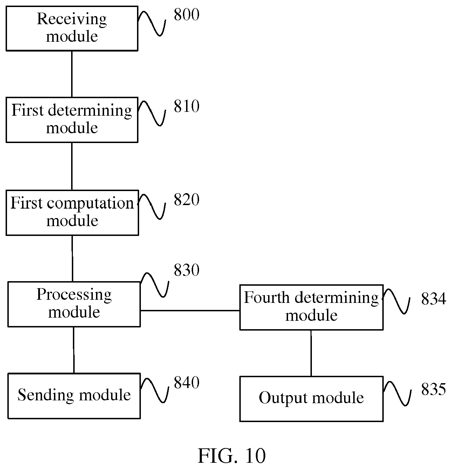

FIG. 10 is a schematic structural diagram of Embodiment 3 of a service deployment apparatus according to the present invention. As shown in FIG. 10, based on the apparatus shown in FIG. 8, the apparatus may further include:

a fourth determining module 834, configured to: if the first service path does not meet the survivability requirement, determine a lacking resource that the first idle resource lacks and that causes the first service path not meeting the survivability requirement; and

an output module 835, configured to: if it is determined, according to a second instruction, to stop service path computation, output information about the lacking resource.

The service deployment apparatus in this embodiment may perform the technical solution of the method embodiment shown in FIG. 3, implementation principles of the technical solution are similar, and details are not described herein again.

The service deployment apparatus provided in this embodiment outputs lacking resource information that causes a service path in a network not meeting a survivability requirement, providing guidance on operations, maintenance, and improvement of the network.

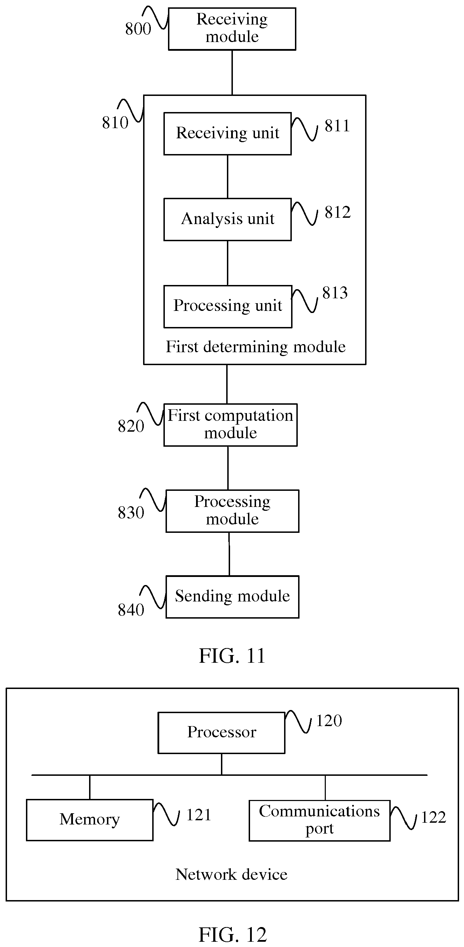

FIG. 11 is a schematic structural diagram of Embodiment 4 of a service deployment apparatus according to the present invention. Before determining the first idle resource in all the resources of the network except the critical resource, the first determining module 810 shown in any one of FIG. 8 to FIG. 10 is further configured to: based on all the resources of the network, perform simulation survivability analysis on the existing service path in the network, and determine the critical resource that enables the existing service path in the network to meet the survivability requirement.

Further, as shown in FIG. 11, FIG. 8 is used as an example, and the first determining module 810 in FIG. 8 may include:

a receiving unit 811, configured to receive an offline service survivability analysis request;
an analysis unit 812, configured to: based on all the resources of the network, perform the survivability analysis on the existing service path in the network, and determine a fourth idle resource that enables the existing service path in the network to meet the survivability requirement; and
a processing unit 813, configured to select, from the fourth idle resource according to a preset condition, a minimum quantity of resources that enable the existing service path to meet the survivability requirement, as the critical resource.

Specifically, a quantity of resources included in the fourth idle resource is N, and correspondingly, the processing unit 813 is specifically configured to:

select, from the fourth idle resource according to a probability that each resource in the fourth idle resource is selected, [$N/2$] resources as the critical resource;
perform, based on the critical resource, the survivability analysis on the existing service path;
if the existing service path meets the survivability requirement, select, from the critical resource according to the probability that each resource in the critical resource is selected, [[$N/2$]/2] resources as a first critical resource; and based on the first critical resource, repeatedly perform the survivability analysis on the existing service path until, if a quantity of first critical resources is M, the existing service path meets the survivability requirement, and if a quantity of first critical resources is M-1, the existing service path does not meet the survivability requirement, and determine that a minimum quantity of critical resources that enable the existing service path to meet the survivability requirement is M;
where the probability that each resource is selected is determined by a quantity of times that each resource is used when the survivability analysis is performed on the existing service path, N and M are positive integers, and a symbol [ ] denotes that a value within the symbol is rounded up or rounded down.

In another optional embodiment of the present invention, after performing, based on the critical resource, the survivability analysis on the existing service path, the processing unit 813 is further configured to:

if the existing service path does not meet the survivability requirement, select, from resources in the fourth idle resource except the critical resource, $\lceil (N-\lceil N/2\rceil)/2\rceil$ resources, add the selected resources to the critical resource, and use the critical resource to which the selected resources are added as a second critical resource; and

based on the second critical resource, repeatedly perform the survivability analysis on the existing service path until, if a quantity of second critical resources is L, the existing service path does not meet the survivability requirement, and if a quantity of second critical resources is L+1, the existing service path meets the survivability requirement, and determine that a minimum quantity of critical resources that enable the existing service path to meet the survivability requirement is L+1, where L is a positive integer.

The service deployment apparatus in this embodiment may perform the technical solutions of the method embodiments shown in FIG. 4 and FIG. 5, implementation principles of the technical solutions are similar, and details are not described herein again.

Specifically, the survivability analysis includes one-time failure survivability analysis and/or two-time failure survivability analysis.

Further, all the resources include a link resource and a regenerator resource.

The service deployment apparatus provided in this embodiment performs simulation survivability analysis offline on an existing service path in a network according to a preset condition, determines a critical resource in the network, and performs path computation and simulation survivability analysis on a new service by using only an idle resource in the network except the critical resource, so that on the premise that survivability of the existing service path in the network is not affected, a time for service deployment is reduced, and efficiency of establishing a service path is improved. FIG. 12 is a schematic structural diagram of an embodiment of a network device according to the present invention. As shown in FIG. 12, the network device includes: a processor 120, a memory 121, and at least one communications port 122, where the communications port 122 is configured to communicate with a peripheral device, the memory 121 is configured to store a computer program instruction, and the processor 120 is coupled with the memory, and configured to invoke the computer program instruction stored in the memory, to perform the technical solution of the service deployment method shown in any one of FIG. 1 to FIG. 5, where implementation principles of the technical solutions are similar, and details are not described herein again.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

**Claims**

1. A service deployment method applied to an optical network system, comprising:

receiving (S100) a service path computation request sent by a node;
determining (S110) a first idle resource in all resources of the optical network except a critical resource, wherein the critical resource is a resource that enables an existing service path in the optical network to meet a survivability requirement;
performing (S120) service path computation based on the first idle resource, to obtain a first service path;
performing (S130), based on the first idle resource, simulation survivability analysis on the first service path; and
if the first service path meets the survivability requirement, sending (S140) the first service path to the node.

2. The method according to claim 1, after the performing simulation survivability analysis on the first service path, further comprising:

> if the first service path does not meet the survivability requirement, determining (S131), in the first idle resource, a second idle resource that causes the first service path not meeting the survivability requirement;
> if it is determined, according to a first instruction, that service path computation needs to be continued, determining (S132) a third idle resource in all the resources of the network except the critical resource and the second idle resource;
> performing (S133) service path computation based on the third idle resource, to obtain a second service path;
> performing (S134), based on the first idle resource, simulation survivability analysis on the second service path; and
> if the second service path meets the survivability requirement, sending (S135) the second service path to the node.

3. The method according to claim 1, after the performing simulation survivability analysis on the first service path, further comprising:

> if the first service path does not meet the survivability requirement, determining (S136) a resource that is absent from the first idle resource and whose absence causes the first service path not meeting the survivability requirement; and
> if it is determined, according to a second instruction, to stop service path computation, outputting (S137) information about the resource that is absent.

4. The method according to any one of claims 1 to 3, before the determining a first idle resource in all resources of a network except a critical resource, further comprising:

based on all the resources of the network, performing (S101) simulation survivability analysis on the existing service path in the network, and determining the critical resource that enables the existing service path in the network to meet the survivability requirement.

5. The method according to claim 4, wherein the performing simulation survivability analysis on the existing service path in the network, and determining the critical resource that enables the existing service path in the network to meet the survivability requirement comprises:

> receiving (S101a) an offline service survivability analysis request;
> based on all the resources of the network, performing (S101b) the survivability analysis on the existing service path in the network, and determining a fourth idle resource that enables the existing service path in the network to meet the survivability requirement; and
> selecting (S101c), from the fourth idle resource according to a preset condition, a minimum quantity of resources that enable the existing service path to meet the survivability requirement, as the critical resource.

6. The method according to claim 5, wherein a quantity of resources comprised in the fourth idle resource is N, and the selecting, from the fourth idle resource according to a preset condition, a minimum quantity of resources that enable the existing service path to meet the survivability requirement, as the critical resource comprises:

> selecting, from the fourth idle resource according to a probability that each resource in the fourth idle resource is selected, $[N/2]$ resources as the critical resource;
> performing, based on the critical resource, the survivability analysis on the existing service path;
> if the existing service path meets the survivability requirement, selecting, from the critical resource according to the probability that each resource in the critical resource is selected, $[[N/2]/2]$ resources as a first critical resource; and
> based on the first critical resource, repeatedly performing the survivability analysis on the existing service path until the following cases are met: if a quantity of first critical resources is M, the existing service path meets the survivability requirement, and if a quantity of first critical resources is M-1, the existing service path does not meet the survivability requirement, and determining that a minimum quantity of critical resources that enable the existing service path to meet the survivability requirement is M;
> wherein the probability that each resource is selected is determined by a quantity of times that each resource is used when the survivability analysis is performed on the existing service path, N and M are positive integers, and a symbol [ ] denotes that a value within the symbol is rounded up or rounded down.

7. The method according to claim 6, after the performing, based on the critical resource, the survivability analysis on the existing service path, further comprising:

if the existing service path does not meet the survivability requirement, selecting, from resources in the fourth idle resource except the critical resource according to the probability that each resource in the fourth idle resource is selected, $[(N-[N/2])/2]$ resources, adding the selected resources to the critical resource, and using the critical resource to which the selected resources are added, as a second critical resource; and

based on the second critical resource, repeatedly performing the survivability analysis on the existing service path until the following cases are met: if a quantity of second critical resources is L, the existing service path does not meet the survivability requirement, and if a quantity of second critical resources is L+1, the existing service path meets the survivability requirement, and determining that a minimum quantity of critical resources that enable the existing service path to meet the survivability requirement is L+1, wherein L is a positive integer.

8. A service deployment apparatus in an optical network system, comprising:

a receiving module (800), configured to receive a service path computation request sent by a node;

a first determining module (810), configured to determine a first idle resource in all resources of the optical network except a critical resource, wherein the critical resource is a resource that enables an existing service path in the optical network to meet a survivability requirement;

a first computation module (820), configured to perform service path computation based on the first idle resource, to obtain a first service path;

a processing module (830), configured to perform, based on the first idle resource, simulation survivability analysis on the first service path; and

a sending module (840), configured to: if the first service path meets the survivability requirement, send the first service path to the node.

9. The apparatus according to claim 8, wherein the apparatus further comprises:

a second determining module (831), configured to: if the first service path does not meet the survivability requirement, determine, in the first idle resource, a second idle resource that causes the first service path not meeting the survivability requirement;

a third determining module (832), configured to: if it is determined, according to a first instruction, that service path computation needs to be continued, determine a third idle resource in all the resources of the network except the critical resource and the second idle resource; and

a second computation module (833), configured to perform service path computation based on the third idle resource, to obtain a second service path, wherein

the processing module is further configured to perform, based on the first idle resource, simulation survivability analysis on the second service path; and

the sending module is further configured to: if the second service path meets the survivability requirement, send the second service path to the node.

10. The apparatus according to claim 8, wherein the apparatus further comprises:

a fourth determining module (834), configured to: if the first service path does not meet the survivability requirement, determine a resource that is absent from the first idle resource and whose absence causes the first service path not meeting the survivability requirement; and

an output module (835), configured to: if it is determined, according to a second instruction, to stop service path computation, output information about the resource that is absent.

11. The apparatus according to any one of claims 8 to 10, wherein before determining the first idle resource in all the resources of the network except the critical resource, the first determining module is further configured to: based on all the resources of the network, perform simulation survivability analysis on the existing service path in the network, and determine the critical resource that enables the existing service path in the network to meet the survivability requirement.

12. The apparatus according to claim 11, wherein the first determining module comprises:

a receiving unit (811), configured to receive an offline service survivability analysis request;

an analysis unit (812), configured to: based on all the resources of the network, perform the survivability analysis on the existing service path in the network, and determine a fourth idle resource that enables the existing service path in the network to meet the survivability requirement; and

a processing unit (813), configured to select, from the fourth idle resource according to a preset condition, a minimum quantity of resources that enable the existing service path to meet the survivability requirement, as the critical resource.

13. The apparatus according to claim 12, wherein a quantity of resources comprised in the fourth idle resource is N, and the processing unit is specifically configured to:

select, from the fourth idle resource according to a probability that each resource in the fourth idle resource is selected, [$N/2$] resources as the critical resource;

perform, based on the critical resource, the survivability analysis on the existing service path;

if the existing service path meets the survivability requirement, select, from the critical resource according to the probability that each resource in the critical resource is selected, [[$N/2$]/2] resources as a first critical resource; and

based on the first critical resource, repeatedly perform the survivability analysis on the existing service path until the following cases are met: if a quantity of first critical resources is M, the existing service path meets the survivability requirement, and if a quantity of first critical resources is M-1, the existing service path does not meet the survivability requirement, and determine that a minimum quantity of critical resources that enable the existing service path to meet the survivability requirement is M;

wherein the probability that each resource is selected is determined by a quantity of times that each resource is used when the survivability analysis is performed on the existing service path, N and M are positive integers, and a symbol [ ] denotes that a value within the symbol is rounded up or rounded down.

14. The apparatus according to claim 13, wherein after performing, based on the critical resource, the survivability analysis on the existing service path, the processing unit is further configured to:

if the existing service path does not meet the survivability requirement, select, from resources in the fourth idle resource except the critical resource according to the probability that each resource in the fourth idle resource is selected, $\lceil(N-\lceil N/2\rceil)/2\rceil$ resources, add the selected resources to the critical resource, and use the critical resource to which the selected resources are added as a second critical resource; and

based on the second critical resource, repeatedly perform the survivability analysis on the existing service path until the following cases are met: if a quantity of second critical resources is L, the existing service path does not meet the survivability requirement, and if a quantity of second critical resources is L+1, the existing service path meets the survivability requirement, and determine that a minimum quantity of critical resources that enable the existing service path to meet the survivability requirement is L+1, wherein L is a positive integer.

15. A network device, comprising: a processor (120), a memory (121), and at least one communications port (122), wherein the communications port is configured to communicate with a peripheral device, the memory is configured to store a computer program instruction, and the processor is coupled with the memory, and configured to invoke the computer program instruction stored in the memory, to perform the service deployment method according to any one of claims 1 to 7.

**Patentansprüche**

1. Diensteinsatzverfahren, das auf ein optisches Netzwerksystem angewandt wird, umfassend:

Empfangen (S100) einer durch einen Knoten gesendeten Dienstpfad-Berechnungsanforderung;
Bestimmen (S110) einer ersten leerlaufenden Ressource in allen Ressourcen des optischen Netzwerks mit Ausnahme einer kritischen Ressource,
wobei die kritische Ressource eine Ressource ist, die es einem existierendem Dienstpfad in dem optischen Netzwerk ermöglicht, eine Überlebensfähigkeitsanforderung zu erfüllen;
Durchführen (S120) von Dienstpfadberechnung auf der Basis der ersten leerlaufenden Ressource, um einen ersten Dienstpfad zu erhalten;
Durchführen (S130) von Simulationsüberlebensfähigkeitsanalyse an dem ersten Dienstpfad auf der Basis der ersten leerlaufenden Ressource; und

wenn der erste Dienstpfad die Überlebensfähigkeitsanforderung erfüllt, Senden (S140) des ersten Dienstpfads zu dem Knoten.

2. Verfahren nach Anspruch 1, das nach dem Durchführen einer Simulationsüberlebensfähigkeitsanalyse an dem ersten Dienstpfad ferner Folgendes umfasst:

wenn der erste Dienstpfad die Überlebensfähigkeitsanforderung nicht erfüllt, Bestimmen (S131) einer zweiten leerlaufenden Ressource, die bewirkt, dass der erste Dienstpfad die Überlebensfähigkeitsanforderung nicht erfüllt, in der ersten leerlaufenden Ressource;
wenn gemäß einer ersten Anweisung bestimmt wird, dass Dienstpfadberechnung fortgesetzt werden muss, Bestimmen (S132) einer dritten leerlaufenden Ressource in allen Ressourcen des Netzwerks mit Ausnahme der kritischen Ressource und der zweiten leerlaufenden Ressource;
Durchführen (S133) von Dienstpfadberechnung auf der Basis der dritten leerlaufenden Ressource, um einen zweiten Dienstpfad zu erhalten;
Durchführen (S134) von Simulationsüberlebensfähigkeitsanalyse an dem zweiten Dienstpfad auf der Basis der ersten leerlaufenden Ressource; und
wenn der zweite Dienstpfad die Überlebensfähigkeitsanforderung erfüllt, Senden (S135) des zweiten Dienstpfads zu dem Knoten.

3. Verfahren nach Anspruch 1, das nach dem Durchführen von Simulationsüberlebensfähigkeitsanalyse an dem ersten Dienstpfad ferner Folgendes umfasst:

wenn der erste Dienstpfad die Überlebensfähigkeitsanforderung nicht erfüllt, Bestimmen (S136) einer Ressource, die aus der ersten leerlaufenden Ressource fehlt und deren Fehlen verursacht, dass der erste Dienstpfad die Überlebensfähigkeitsanforderung nicht erfüllt; und
wenn gemäß einer zweiten Anweisung bestimmt wird, die Dienstpfadberechnung zu stoppen, Ausgeben (S137) von Informationen über die Ressource, die fehlt.

4. Verfahren nach einem der Ansprüche 1 bis 3, das vor dem Bestimmen einer ersten leerlaufenden Ressource in allen Ressourcen eines Netzwerks mit Ausnahme einer kritischen Ressource ferner Folgendes umfasst:
Durchführen (S101) von Simulationsüberlebensfähigkeitsanalyse an dem existierenden Dienstpfad in dem Netzwerk auf der Basis aller Ressourcen des Netzwerks und Bestimmen der kritischen Ressource, die es dem existierenden Dienstpfad in dem Netzwerk ermöglicht, die Überlebensfähigkeitsanforderung zu erfüllen.

5. Verfahren nach Anspruch 4, wobei das Durchführen von Simulationsüberlebensfähigkeitsanalyse an dem existierenden Dienstpfad in dem Netzwerk und das Bestimmen der kritischen Ressource, die es dem existierenden Dienstpfad in dem Netzwerk ermöglicht, die Überlebensfähigkeitsanforderung zu erfüllen, Folgendes umfasst:

Empfangen (S101a) einer Offline-Dienstüberlebensfähigkeits-Analyseanforderung;
Durchführen (101b) der Überlebensfähigkeitsanalyse an dem existierenden Dienstpfad in dem Netzwerk auf der Basis aller Ressourcen des Netzwerks und Bestimmen einer vierten leerlaufenden Ressource, die es dem existierenden Dienstpfad in dem Netzwerk ermöglicht, die Überlebensfähigkeitsanforderung zu erfüllen; und
Auswählen (S101c) einer Mindestquantität von Ressourcen, die es dem existierenden Dienstpfad ermöglicht, die Überlebensfähigkeitsanforderung zu erfüllen, als die kritische Ressource aus der vierten leerlaufenden Ressource gemäß einer voreingestellten Bedingung.

6. Verfahren nach Anspruch 5, wobei eine Quantität von in der vierten leerlaufenden Ressource enthaltenen Ressourcen N ist und das Auswählen einer Mindestquantität von Ressourcen, die es dem existierenden Dienstpfad ermöglicht, die Überlebensfähigkeitsanforderung zu erfüllen, als die kritische Ressource aus der vierten leerlaufenden Ressource gemäß einer voreingestellten Bedingung Folgendes umfasst:

Auswählen von $[N/2]$-Ressourcen als die kritische Ressource aus der vierten leerlaufenden Ressource gemäß einer Wahrscheinlichkeit, dass jede Ressource in der vierten leerlaufenden Ressource ausgewählt wird;
Durchführen der Überlebensfähigkeitsanalyse an dem existierenden Dienstpfad auf der Basis der kritischen Ressource;
wenn der existierende Dienstpfad die Überlebensfähigkeitsanforderung erfüllt, Auswählen von $[[N/2]/2]$-Ressourcen als eine erste kritische Ressource aus der kritischen Ressource gemäß der Wahrscheinlichkeit, dass jede Ressource in der kritischen Ressource ausgewählt wird; und

wiederholtes Durchführen der Überlebensfähigkeitsanalyse an dem existierenden Dienstpfad auf der Basis der ersten kritischen Ressource, bis die folgenden Fälle erfüllt sind: wenn eine Quantität erster kritischer Ressourcen M ist, erfüllt der existierende Dienstpfad die Überlebensfähigkeitsanforderung, und wenn eine Quantität erster kritischer Ressourcen M-1 ist, erfüllt der existierende Dienstpfad die Überlebensfähigkeitsanforderung nicht, und Bestimmen, dass eine Mindestquantität kritischer Ressourcen, die es dem existierenden Dienstpfad ermöglichen, die Überlebensfähigkeitsanforderung zu erfüllen, M ist;

wobei die Wahrscheinlichkeit, dass jede Ressource ausgewählt wird, durch eine Quantität von Malen, wie oft jede Ressource verwendet wird, bestimmt wird, wenn die Überlebensfähigkeitsanalyse an dem existierenden Dienstpfad durchgeführt wird, N und M positive ganze Zahlen sind und ein Symbol [] bedeutet, dass ein Wert in dem Symbol auf- oder abgerundet wird.

7. Verfahren nach Anspruch 6, das nach dem Durchführen der Überlebensfähigkeitsanalyse an dem existierenden Dienstpfad auf der Basis der kritischen Ressource ferner Folgendes umfasst:

wenn der existierende Dienstpfad die Überlebensfähigkeitsanforderung nicht erfüllt, Auswählen von $[(N-[N/2])/2]$ Ressourcen aus Ressourcen in der vierten leerlaufenden Ressource mit Ausnahme der kritischen Ressource gemäß der Wahrscheinlichkeit, dass jede Ressource in der vierten leerlaufenden Ressource ausgewählt wird, Hinzufügen der ausgewählten Ressourcen zu der kritischen Ressource und Verwenden der kritischen Ressource, zu der die ausgewählten Ressourcen hinzugefügt werden, als eine zweite kritische Ressource; und

wiederholtes Durchführen der Überlebensfähigkeitsanalyse an dem existierenden Dienstpfad auf der Basis der zweiten kritischen Ressource, bis die folgenden Fälle erfüllt sind: wenn eine Quantität zweiter kritischer Ressourcen L ist, erfüllt der existierende Dienstpfad die Überlebensfähigkeitsanforderung nicht, und wenn eine Quantität zweiter kritischer Ressourcen L+1 ist, erfüllt der existierende Dienstpfad die Überlebensfähigkeitsanforderung, und Bestimmen, dass eine Mindestquantität kritischer Ressourcen, die es dem existierenden Dienstpfad ermöglicht, die Überlebensfähigkeitsanforderung zu erfüllen, L+1 ist, wobei L eine positive ganze Zahl ist.

8. Diensteinsatzvorrichtung in einem optischen Netzwerksystem, umfassend:

ein Empfangsmodul (800), ausgelegt zum Empfangen einer durch einen Knoten gesendeten Dienstpfad-Berechnungsanforderung;

ein erstes Bestimmungsmodul (810), ausgelegt zum Bestimmen einer ersten leerlaufenden Ressource in allen Ressourcen des optischen Netzwerks mit Ausnahme einer kritischen Ressource, wobei die kritische Ressource eine Ressource ist, die es einem existierenden Dienstpfad in dem optischen Netzwerk ermöglicht, eine Überlebensfähigkeitsanforderung zu erfüllen,

ein erstes Berechnungsmodul (820), ausgelegt zum Durchführen von Dienstpfadberechnung auf der Basis der ersten leerlaufenden Ressource, um einen ersten Dienstpfad zu erhalten;

ein Verarbeitungsmodul (830), ausgelegt zum Durchführen einer Simulationsüberlebensfähigkeitsanalyse an dem ersten Dienstpfad auf der Basis der ersten leerlaufenden Ressource; und

ein Sendemodul (840), ausgelegt zum Senden des ersten Dienstpfads zu dem Knoten, wenn der erste Dienstpfad die Überlebensfähigkeitsanforderung erfüllt.

9. Vorrichtung nach Anspruch 8, wobei die Vorrichtung ferner Folgendes umfasst:

ein zweites Bestimmungsmodul (831), das für Folgendes ausgelegt ist: wenn der erste Dienstpfad die Überlebensfähigkeitsanforderung nicht erfüllt, Bestimmen einer zweiten leerlaufenden Ressource, die bewirkt, dass der erste Dienstpfad die Überlebensfähigkeitsanforderung nicht erfüllt, in der ersten der laufenden Ressource;

ein drittes Bestimmungsmodul (832), das für Folgendes ausgelegt ist: wenn gemäß einer ersten Anweisung bestimmt wird, dass Dienstpfadberechnung fortgesetzt werden muss, Bestimmen einer dritten leerlaufenden Ressource in allen Ressourcen des Netzwerks mit Ausnahme der kritischen Ressource und der zweiten leerlaufenden Ressource; und

ein zweites Berechnungsmodul (833), ausgelegt zum Durchführen von Dienstpfadberechnung auf der Basis der dritten leerlaufenden Ressource, um einen zweiten Dienstpfad zu erhalten, wobei das Verarbeitungsmodul ferner ausgelegt ist zum Durchführen von Simulationsüberlebensfähigkeitsanalyse an dem zweiten Dienstpfad auf der Basis der ersten leerlaufenden Ressource; und

das Sendemodul ferner für Folgendes ausgelegt ist: wenn der zweite Dienstpfad die Überlebensfähigkeitsanforderung erfüllt, Senden des zweiten Dienstpfads zu dem Knoten.

10. Vorrichtung nach Anspruch 8, wobei die Vorrichtung ferner Folgendes umfasst:

ein viertes Bestimmungsmodul (834), das für Folgendes ausgelegt ist: wenn der erste Dienstpfad die Überlebensfähigkeitsanforderung nicht erfüllt, Bestimmen einer Ressource, die aus der ersten leerlaufenden Ressource fehlt und deren Fehlen verursacht, dass der erste Dienstpfad die Überlebensfähigkeitsanforderung nicht erfüllt; und

ein Ausgabemodul (835), das für Folgendes ausgelegt ist: wenn gemäß einer zweiten Anweisung bestimmt wird, die Dienstpfadberechnung zu stoppen, Ausgeben von Informationen über die Ressource, die fehlt.

11. Vorrichtung nach einem der Ansprüche 8 bis 10, wobei das erste Bestimmungsmodul vor dem Bestimmen der ersten leerlaufenden Ressource in allen Ressourcen des Netzwerks mit Ausnahme der kritischen Ressource ferner ausgelegt ist zum Durchführen von Simulationsüberlebensfähigkeitsanalyse an dem existierenden Dienstpfad in dem Netzwerk auf der Basis aller Ressourcen des Netzwerks und Bestimmen der kritischen Ressource, die es dem existierenden Dienstpfad in dem Netzwerk ermöglicht, die Überlebensfähigkeitsanforderung zu erfüllen.

12. Vorrichtung nach Anspruch 11, wobei das erste Bestimmungsmodul Folgendes umfasst:

eine Empfangseinheit (811), ausgelegt zum Empfangen einer Offline-Dienstüberlebensfähigkeits-Analyseanforderung;
eine Analyseeinheit (812), ausgelegt zum Durchführen der Überlebensfähigkeitsanalyse an dem existierenden Dienstpfad in dem Netzwerk auf der Basis aller Ressourcen des Netzwerks und Bestimmen einer vierten leerlaufenden Ressource, die es dem existierenden Dienstpfad in dem Netzwerk ermöglicht, die Überlebensfähigkeitsanforderung zu erfüllen; und
eine Verarbeitungseinheit (813), ausgelegt zum Auswählen einer Mindestquantität von Ressourcen, die es dem existierenden Dienstpfad ermöglicht, die Überlebensfähigkeitsanforderung zu erfüllen, als die kritische Ressource aus der vierten leerlaufenden Ressource gemäß einer voreingestellten Bedingung.

13. Vorrichtung nach Anspruch 12, wobei eine Quantität von in der vierten leerlaufenden Ressource enthaltenen Ressourcen N ist und die Verarbeitungseinheit speziell ausgelegt ist zum
Auswählen von $[N/2]$-Ressourcen als die kritische Ressource aus der vierten leerlaufenden Ressource gemäß einer Wahrscheinlichkeit, dass jede Ressource in der vierten leerlaufenden Ressource ausgewählt wird;
Durchführen der Überlebensfähigkeitsanalyse an dem existierenden Dienstpfad auf der Basis der kritischen Ressource;
wenn der existierende Dienstpfad die Überlebensfähigkeitsanforderung erfüllt, Auswählen von $[[N/2]/2]$-Ressourcen als eine erste kritische Ressource aus der kritischen Ressource gemäß der Wahrscheinlichkeit, dass jede Ressource in der kritischen Ressource ausgewählt wird; und
wiederholtes Durchführen der Überlebensfähigkeitsanalyse an dem existierenden Dienstpfad auf der Basis der ersten kritischen Ressource, bis die folgenden Fälle erfüllt sind: wenn eine Quantität erster kritischer Ressourcen M ist, erfüllt der existierende Dienstpfad die Überlebensfähigkeitsanforderung, und wenn eine Quantität erster kritischer Ressourcen M-1 ist, erfüllt der existierende Dienstpfad die Überlebensfähigkeitsanforderung nicht, und Bestimmen, dass eine Mindestquantität kritischer Ressourcen, die es dem existierenden Dienstpfad ermöglichen, die Überlebensfähigkeitsanforderung zu erfüllen, M ist;
wobei die Wahrscheinlichkeit, dass jede Ressource ausgewählt wird, durch eine Quantität von Malen, wie oft jede Ressource verwendet wird, bestimmt wird, wenn die Überlebensfähigkeitsanalyse an dem existierenden Dienstpfad durchgeführt wird, N und M positive ganze Zahlen sind und ein Symbol [] bedeutet, dass ein Wert in dem Symbol auf- oder abgerundet wird.

14. Vorrichtung nach Anspruch 13, wobei die Verarbeitungseinheit nach dem Durchführen der Überlebensfähigkeitsanalyse an dem existierenden Dienstpfad auf der Basis der kritischen Ressource ferner für Folgendes ausgelegt ist:

wenn der existierende Dienstpfad die Überlebensfähigkeitsanforderung nicht erfüllt, Auswählen von $[(N-[N/2])/2]$ Ressourcen aus Ressourcen in der vierten leerlaufenden Ressource mit Ausnahme der kritischen Ressource gemäß der Wahrscheinlichkeit, dass jede Ressource in der vierten leerlaufenden Ressource ausgewählt wird, Hinzufügen der ausgewählten Ressourcen zu der kritischen Ressource und Verwenden der kritischen Ressource, zu der die ausgewählten Ressourcen hinzugefügt werden, als eine zweite kritische Ressource; und
wiederholtes Durchführen der Überlebensfähigkeitsanalyse an dem existierenden Dienstpfad auf der Basis der zweiten kritischen Ressource, bis die folgenden Fälle erfüllt sind: wenn eine Quantität zweiter kritischer Ressourcen L ist, erfüllt der existierende Dienstpfad die Überlebensfähigkeitsanforderung nicht, und wenn eine Quantität zweiter kritischer Ressourcen L+1 ist, erfüllt der existierende Dienstpfad die Überlebensfähigkeitsanforderung, und Bestimmen, dass eine Mindestquantität kritischer Ressourcen, die es dem existierenden Dienstpfad ermöglicht, die Überlebensfähigkeitsanforderung zu erfüllen, L+1 ist, wobei L eine positive ganze Zahl ist.

15. Netzwerkvorrichtung, die einen Prozessor (120), einen Speicher (121) und mindestens einen Kommunikationsport (122) umfasst, wobei der Kommunikationsport ausgelegt ist zum Kommunizieren mit einer Peripherievorrichtung, der Speicher ausgelegt ist zum Speichern einer Computerprogrammanweisung und der Prozessor mit dem Speicher gekoppelt und ausgelegt ist zum Aufrufen der Computerprogrammanweisung, die in dem Speicher gespeichert ist, um das Diensteinsatzverfahren nach einem der Ansprüche 1 bis 7 auszuführen.

**Revendications**

1. Procédé de déploiement de service appliqué à un système de réseau optique, consistant :

   à recevoir (S100) une demande de calcul de trajet de service envoyée par un noeud ;
   à déterminer (S110) une première ressource inoccupée dans toutes les ressources du réseau optique, à l'exception d'une ressource critique, dans lequel la ressource critique est une ressource qui permet à un trajet de service existant dans le réseau optique de satisfaire une exigence de capacité de survie ;
   à effectuer (S120) un calcul de trajet de service sur la base de la première ressource inoccupée pour obtenir un premier trajet de service ;
   à effectuer (S130), en se basant sur la première ressource inoccupée, une analyse de capacité de survie de simulation sur le premier trajet de service ; et
   si le premier trajet de service satisfait l'exigence de capacité de survie, à envoyer (S 140) le premier trajet de service au noeud.

2. Procédé selon la revendication 1, après la réalisation de l'analyse de capacité de survie de simulation sur le premier trajet de service, consistant en outre :

   si le premier trajet de service ne satisfait pas l'exigence de capacité de survie, à déterminer (S131), dans la première ressource inoccupée, une deuxième ressource inoccupée qui contraint le premier trajet de service à ne pas satisfaire l'exigence de capacité de survie ;
   s'il est déterminé, en fonction d'une première instruction, qu'un calcul de trajet de service doit être poursuivi, à déterminer (S132) une troisième ressource inoccupée dans toutes les ressources du réseau, à l'exception de la ressource critique et de la deuxième ressource inoccupée ;
   à effectuer (S133) un calcul de trajet de service en se basant sur la troisième ressource inoccupée pour obtenir un second trajet de service ;
   à effectuer (S134), en se basant sur la première ressource inoccupée, une analyse de capacité de survie de simulation sur le second trajet de service ; et
   si le second trajet de service satisfait l'exigence de capacité de survie, à envoyer (S135) le second trajet de service au noeud.

3. Procédé selon la revendication 1, après la réalisation de l'analyse de capacité de survie de simulation sur le premier trajet de service, consistant en outre :

   si le premier trajet de service ne satisfait pas l'exigence de capacité de survie, à déterminer (S 136) une ressource qui est absente de la première ressource inoccupée et
   dont l'absence contraint le premier trajet de service à ne pas satisfaire l'exigence de capacité de survie ; et
   s'il est déterminé, en fonction d'une seconde instruction, d'arrêter un calcul de trajet de service, à transmettre (S137) des informations concernant la ressource qui est absente.

4. Procédé selon l'une quelconque des revendications 1 à 3, avant la détermination d'une première ressource inoccupée dans toutes les ressources d'un réseau, à l'exception d'une ressource critique, consistant en outre :
   en se basant sur toutes les ressources du réseau, à effectuer (S101) une analyse de capacité de survie de simulation sur le trajet de service existant dans le réseau et à déterminer la ressource critique qui permet au trajet de service existant dans le réseau de satisfaire l'exigence de capacité de survie.

5. Procédé selon la revendication 4, dans lequel la réalisation de l'analyse de capacité de survie de simulation sur le trajet de service existant dans le réseau et la détermination de la ressource critique qui permet au trajet de service existant dans le réseau de satisfaire l'exigence de capacité de survie, consistent :

à recevoir (S101a) une demande d'analyse de capacité de survie de service hors ligne ;

en se basant sur toutes les ressources du réseau, à effectuer (S101b) l'analyse de capacité de survie sur le trajet de service existant dans le réseau et à déterminer une quatrième ressource inoccupée qui permet au trajet de service existant dans le réseau de satisfaire l'exigence de capacité de survie ; et

à sélectionner (S101c), parmi la quatrième ressource inoccupée selon une condition prédéfinie, une quantité minimale de ressources qui permettent au trajet de service existant de satisfaire l'exigence de capacité de survie, en tant que ressource critique.

6. Procédé selon la revendication 5, dans lequel une quantité de ressources incluses dans la quatrième ressource inoccupée est N et la sélection, parmi la quatrième ressource inoccupée selon une condition prédéfinie, d'une quantité minimale de ressources qui permettent au trajet de service existant de satisfaire l'exigence de capacité de survie, en tant que ressource critique, consiste :

à sélectionner, parmi la quatrième ressource inoccupée selon une probabilité que chaque ressource dans la quatrième ressource inoccupée soit sélectionnée, [N/2] ressources en tant que ressource critique ;

à effectuer, en se basant sur la ressource critique, l'analyse de capacité de survie sur le trajet de service existant ;

si le trajet de service existant satisfait l'exigence de capacité de survie, à sélectionner, parmi la ressource critique selon la probabilité que chaque ressource dans la ressource critique soit sélectionnée, [[N/2]/2] ressources en tant que première ressource critique ; et

en se basant sur la première ressource critique, à effectuer à plusieurs reprises l'analyse de capacité de survie sur le trajet de service existant jusqu'à ce que les cas suivants soient satisfaits : si une quantité de premières ressources critiques est M, le trajet de service existant satisfait l'exigence de capacité de survie et, si une quantité de premières ressources critiques est M - 1, le trajet de service existant ne satisfait pas l'exigence de capacité de survie et à déterminer qu'une quantité minimale de ressources critiques qui permettent au trajet de service existant de satisfaire l'exigence de capacité de survie, est M ;

dans lequel la probabilité que chaque ressource soit sélectionnée, est déterminée par une quantité de fois où chaque ressource est utilisée lorsque l'analyse de capacité de survie est effectuée sur le trajet de service existant, N et M sont des nombres entiers positifs et un symbole [] signifie qu'une valeur dans le symbole est arrondie vers le haut ou arrondie vers le bas.

7. Procédé selon la revendication 6, après la réalisation, en se basant sur la ressource critique, de l'analyse de capacité de survie sur le trajet de service existant, consistant en outre :

si le trajet de service existant ne satisfait pas l'exigence de capacité de survie, à sélectionner, parmi des ressources dans la quatrième ressource inoccupée à l'exception de la ressource critique selon la probabilité que chaque ressource dans la quatrième ressource inoccupée soit sélectionnée, [(N-[N/2])/2] ressources, à ajouter les ressources sélectionnées à la ressource critique et à utiliser la ressource critique à laquelle les ressources sélectionnées sont ajoutées, comme seconde ressource critique ; et

en se basant sur la seconde ressource critique, à effectuer à plusieurs reprises l'analyse de capacité de survie sur le trajet de service existant jusqu'à ce que les cas suivants soient satisfaits : si une quantité de secondes ressources critiques est L, le trajet de service existant ne satisfait pas l'exigence de capacité de survie et si une quantité de secondes ressources critiques est L + 1, le trajet de service existant satisfait l'exigence de capacité de survie et à déterminer qu'une quantité minimale de ressources critiques qui permettent au trajet de service existant de satisfaire l'exigence de capacité de survie, est L + 1, dans lequel L est un nombre entier positif.

8. Appareil de déploiement de service dans un système de réseau optique, comprenant :

un module de réception (800), configuré pour recevoir une demande de calcul de trajet de service envoyée par un noeud ;

un premier module de détermination (810), configuré pour déterminer une première ressource inoccupée dans toutes les ressources du réseau optique, à l'exception d'une ressource critique, dans lequel la ressource critique est une ressource qui permet à un trajet de service existant dans le réseau optique de satisfaire une exigence de capacité de survie ;

un premier module de calcul (820), configuré pour effectuer un calcul de trajet de service en se basant sur la première ressource inoccupée pour obtenir un premier trajet de service ;

un module de traitement (830), configuré pour effectuer, en se basant sur la première ressource inoccupée, une analyse de capacité de survie de simulation sur le premier trajet de service ; et

un module d'envoi (840), configuré : si le premier trajet de service satisfait l'exigence de capacité de survie, pour envoyer le premier trajet de service au noeud.

9. Appareil selon la revendication 8, dans lequel l'appareil comprend en outre :

un second module de détermination (831), configuré : si le premier trajet de service ne satisfait pas l'exigence de capacité de survie, pour déterminer, dans la première ressource inoccupée, une deuxième ressource inoccupée qui contraint le premier trajet de service à ne pas satisfaire l'exigence de capacité de survie ;
un troisième module de détermination (832), configuré : s'il est déterminé, en fonction d'une première instruction, qu'un calcul de trajet de service doit être poursuivi, pour déterminer une troisième ressource inoccupée dans toutes les ressources du réseau, à l'exception de la ressource critique et de la deuxième ressource inoccupée ; et
un second module de calcul (833), configuré pour effectuer un calcul de trajet de service en se basant sur la troisième ressource inoccupée pour obtenir un second trajet de service, dans lequel
le module de traitement est en outre configuré pour effectuer, en se basant sur la première ressource inoccupée, une analyse de capacité de survie de simulation sur le second trajet de service ; et
le module d'envoi est en outre configuré : si le second trajet de service satisfait l'exigence de capacité de survie, pour envoyer le second trajet de service au noeud.

10. Appareil selon la revendication 8, dans lequel l'appareil comprend en outre :

un quatrième module de détermination (834), configuré : si le premier trajet de service ne satisfait pas l'exigence de capacité de survie, pour déterminer une ressource qui est absente de la première ressource inoccupée et dont l'absence contraint le premier trajet de service à ne pas satisfaire l'exigence de capacité de survie ; et
un module de sortie (835), configuré : s'il est déterminé, en fonction d'une seconde instruction, d'arrêter un calcul de trajet de service, pour transmettre des informations concernant la ressource qui est absente.

11. Appareil selon l'une quelconque des revendications 8 à 10, dans lequel, avant la détermination de la première ressource inoccupée dans toutes les ressources du réseau, à l'exception de la ressource critique, le premier module de détermination est en outre configuré : en se basant sur toutes les ressources du réseau, pour effectuer une analyse de capacité de survie de simulation sur le trajet de service existant dans le réseau et pour déterminer la ressource critique qui permet au trajet de service existant dans le réseau de satisfaire l'exigence de capacité de survie.

12. Appareil selon la revendication 11, dans lequel le premier module de détermination comprend :

une unité de réception (811), configurée pour recevoir une demande d'analyse de capacité de survie de service hors ligne ;
une unité d'analyse (812), configurée : en se basant sur toutes les ressources du réseau, pour effectuer l'analyse de capacité de survie sur le trajet de service existant dans le réseau et pour déterminer une quatrième ressource inoccupée qui permet au trajet de service existant dans le réseau de satisfaire l'exigence de capacité de survie ; et
une unité de traitement (813), configurée pour sélectionner, parmi la quatrième ressource inoccupée selon une condition prédéfinie, une quantité minimale de ressources qui permettent au trajet de service existant de satisfaire l'exigence de capacité de survie, en tant que ressource critique.

13. Appareil selon la revendication 12, dans lequel une quantité de ressources incluses dans la quatrième ressource inoccupée est N et l'unité de traitement est spécialement configurée :

pour sélectionner, parmi la quatrième ressource inoccupée selon une probabilité que chaque ressource dans la quatrième ressource inoccupée soit sélectionnée, [N/2] ressources en tant que ressource critique ;
pour effectuer, en se basant sur la ressource critique, l'analyse de capacité de survie sur le trajet de service existant ;
si le trajet de service existant satisfait l'exigence de capacité de survie, pour sélectionner, parmi la ressource critique selon la probabilité que chaque ressource dans la ressource critique soit sélectionnée, [[N/2]/2] ressources en tant que première ressource critique ; et
en se basant sur la première ressource critique, pour effectuer à plusieurs reprises l'analyse de capacité de survie sur le trajet de service existant jusqu'à ce que les cas suivants soient satisfaits : si une quantité de premières ressources critiques est M, le trajet de service existant satisfait l'exigence de capacité de survie et, si une quantité de premières ressources critiques est M - 1, le trajet de service existant ne satisfait pas l'exigence de capacité de survie et pour déterminer qu'une quantité minimale de ressources critiques qui permettent au trajet de service existant de satisfaire l'exigence de capacité de survie, est M ;

dans lequel probabilité que chaque ressource soit sélectionnée, est déterminée par une quantité de fois où chaque ressource est utilisée lorsque l'analyse de capacité de survie est effectuée sur le trajet de service existant, N et M sont des nombres entiers positifs et un symbole [] signifie qu'une valeur dans le symbole est arrondie vers le haut ou arrondie vers le bas.

14. Appareil selon la revendication 13, dans lequel, après la réalisation, en se basant sur la ressource critique, de l'analyse de capacité de survie sur le trajet de service existant, l'unité de traitement est en outre configurée :

si le trajet de service existant ne satisfait pas l'exigence de capacité de survie, pour sélectionner, parmi des ressources dans la quatrième ressource inoccupée à l'exception de la ressource critique selon la probabilité que chaque ressource dans la quatrième ressource inoccupée soit sélectionnée, [(N-[N/2])/2] ressources, pour ajouter les ressources sélectionnées à la ressource critique et pour utiliser la ressource critique à laquelle les ressources sélectionnées sont ajoutées, comme seconde ressource critique ; et

en se basant sur la seconde ressource critique, pour effectuer à plusieurs reprises l'analyse de capacité de survie sur le trajet de service existant jusqu'à ce que les cas suivants soient satisfaits : si une quantité de secondes ressources critiques est L, le trajet de service existant ne satisfait pas l'exigence de capacité de survie et si une quantité de secondes ressources critiques est L + 1, le trajet de service existant satisfait l'exigence de capacité de survie et pour déterminer qu'une quantité minimale de ressources critiques qui permettent au trajet de service existant de satisfaire l'exigence de capacité de survie, est L + 1, dans lequel L est un nombre entier positif.

15. Dispositif de réseau, comprenant : un processeur (120), une mémoire (121) et au moins un port de communication (122), dans lequel le port de communication est configuré pour communiquer avec un dispositif périphérique, la mémoire est configurée pour stocker une instruction de programme d'ordinateur et le processeur est couplé à la mémoire et configuré pour invoquer l'instruction de programme d'ordinateur stockée dans la mémoire pour réaliser le procédé de déploiement de service selon l'une quelconque des revendications 1 à 7.

Receive a service path computation request sent by a node — S100

Determine a first idle resource in all resources of a network except a critical resource, where the critical resource is a resource that enables an existing service path in the network to meet a survivability requirement — S110

Perform service path computation based on the first idle resource, to obtain a first service path — S120

Perform, based on the first idle resource, simulation survivability analysis on the first service path — S130

If the first service path meets the survivability requirement, send the first service path to the node — S140

FIG. 1

```
┌─────────────────────────────────────────┐
│ Receive a service path computation request sent by a │   S100
│ node                                                 │
└─────────────────────────────────────────┘
                    │
                    ▼
┌─────────────────────────────────────────┐
│ Determine a first idle resource in all resources of a │   S110
│ network except a critical resource, where the critical │
│ resource is a resource that enables an existing service │
│ path in the network to meet a survivability          │
│ requirement                                          │
└─────────────────────────────────────────┘
                    │
                    ▼
┌─────────────────────────────────────────┐
│ Perform service path computation based on the first  │   S120
│ idle resource, to obtain a first service path        │
└─────────────────────────────────────────┘
                    │
                    ▼
┌─────────────────────────────────────────┐
│ Perform, based on the first idle resource, simulation │   S130
│ survivability analysis on the first service path     │
└─────────────────────────────────────────┘
                    │
                    ▼
┌─────────────────────────────────────────┐
│ If the first service path does not meet the          │   S131
│ survivability requirement, determine, in the first idle │
│ resource, a second idle resource that causes the first │
│ service path not meeting the survivability           │
│ requirement                                          │
└─────────────────────────────────────────┘
                    │
                    ▼
┌─────────────────────────────────────────┐
│ If it is determined, according to a first instruction, │   S132
│ that service path computation needs to be continued, │
│ determine a third idle resource in all the resources of │
│ the network except the critical resource and the     │
│ second idle resource                                 │
└─────────────────────────────────────────┘
                    │
                    ▼
┌─────────────────────────────────────────┐
│ Perform service path computation based on the third  │   S133
│ idle resource, to obtain a second service path       │
└─────────────────────────────────────────┘
                    │
                    ▼
┌─────────────────────────────────────────┐
│ Perform, based on the first idle resource, simulation │   S134
│ survivability analysis on the second service path    │
└─────────────────────────────────────────┘
                    │
                    ▼
┌─────────────────────────────────────────┐
│ If the second service path meets the survivability   │   S135
│ requirement, send the second service path to the node │
└─────────────────────────────────────────┘
```

FIG. 2

Receive a service path computation request sent by a node

S100

Determine a first idle resource in all resources of a network except a critical resource, where the critical resource is a resource that enables an existing service path in the network to meet a survivability requirement

S110

Perform service path computation based on the first idle resource, to obtain a first service path

S120

Perform, based on the first idle resource, simulation survivability analysis on the first service path

S130

If the first service path does not meet the survivability requirement, determine a lacking resource that the first idle resource lacks and that causes the first service path not meeting the survivability requirement

S136

If it is determined, according to a second instruction, to stop service path computation, output information about the lacking resource

S137

FIG. 3

Based on all resources of a network, perform simulation survivability analysis on an existing service path in the network, and determine a critical resource that enables the existing service path in the network to meet a survivability requirement ⟩ S101

Determine a first idle resource in all the resources of the network except the critical resource, where the critical resource is a resource that enables the existing service path in the network to meet the survivability requirement ⟩ S110

FIG. 4

Receive an offline service survivability analysis request ⟩ S101a

Based on all resources of a network, perform survivability analysis on an existing service path in the network, and determine a fourth idle resource that enables the existing service path in the network to meet a survivability requirement ⟩ S101b

Select, from the fourth idle resource according to a preset condition, a minimum quantity of resources that enable the existing service path to meet the survivability requirement, as the critical resource ⟩ S101c

Determine a first idle resource in all the resources of the network except the critical resource, where the critical resource is a resource that enables the existing service path in the network to meet the survivability requirement ⟩ S110

FIG. 5

FIG. 6

A PCE receives a sensitivity analysis request — S700

The PCE determines a critical resource that enables an existing service path in a network to meet survivability analysis requirement — S710

The PCE receives a service path computation request sent by a node A — S720

The PCE determines an available idle regenerator resource in the network — S730

The PCE performs, based on the available idle regenerator resource in the network, service path computation for a service LSP4 and a service LSP5 — S740

The PCE performs, based on the available idle regenerator resource in the network, one-failure simulation survivability analysis on service paths of the services LSP4 and LSP5 — S750

The PCE sends the service paths of the services LSP4 and LSP5 to the node A — S760

FIG. 7

FIG. 8

800 — Receiving module

810 — First determining module

820 — First computation module

830 — Processing module ——— Second determining module — 831

840 — Sending module

Third determining module — 832

Second computation module — 833

FIG. 9

FIG. 10

800 Receiving module

810 First determining module

Receiving unit 811

Analysis unit 812

Processing unit 813

820 First computation module

830 Processing module

840 Sending module

FIG. 11

Processor 120

Memory 121

Communications port 122

Network device

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013236169 A1
- CN 101707788 A